(19) **Europäisches Patentamt**

**European Patent Office**

**Office européen des brevets**

(11) **EP 1 081 442 A1**

(12) **EUROPÄISCHE PATENTANMELDUNG**

(43) Veröffentlichungstag:
07.03.2001 Patentblatt 2001/10

(51) Int. Cl.⁷: **F24F 11/00**

(21) Anmeldenummer: **00117594.2**

(22) Anmeldetag: **16.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.09.1999 DE 19942491**

(71) Anmelder: **Dürr Systems GmbH**
**70435 Stuttgart (DE)**

(72) Erfinder:
• **Klenge, Thomas**
**71229 Leonberg (DE)**
• **Uetz, Rainer**
**71732 Tamm (DE)**

(74) Vertreter:
**Hoeger, Stellrecht & Partner**
**Uhlandstrasse 14 c**
**70182 Stuttgart (DE)**

(54) **Verfahren zum Regeln einer Zuluft-Konditionieranlage und Regelvorrichtung für eine Zuluft-Konditionieranlage**

(57) Um ein Verfahren zum Regeln einer Zuluft-Konditionieranlage (100), welche mindestens zwei Aktoren (122,134,142) zur Beeinflussung der Temperatur und der Feuchte von einem Arbeitsraum zuzuführender Zuluft umfaßt, wobei jeder Aktor durch einen diesem Aktor zugeordneten Regler (126,138,146) in Abhängigkeit von jeweils einer Reglereingangsgröße geregelt wird, zu schaffen, das es ermöglicht, auch bei starken Veränderungen der Außenlufttemperatur und/oder der Außenluftfeuchte die Zulufttemperatur und die Zuluftfeuchte zuverlässig innerhalb eines vorgegebenen Prozeßfensters zu halten, wird vorgeschlagen, daß mindestens eine der Reglereingangsgrößen als gemischte Reglereingangsgröße durch Verknüpfung einer Temperatur-Sollwertabweichung mit einer Feuchte-Sollwertabweichung gebildet wird.

FIG.1

EP 1 081 442 A1

**Beschreibung**

Die vorliegende Erfindung betrifft ein Verfahren zum Regeln einer Zuluft-Konditionieranlage, welche mindestens zwei Aktoren zur Beeinflussung der Temperatur und der Feuchte von einem Arbeitsraum zuzuführender Zuluft umfaßt, wobei jeder Aktor durch einen diesem Aktor zugeordneten Regler in Abhängigkeit von jeweils einer Reglereingangsgröße geregelt wird.

Ferner betrifft die vorliegende Erfindung eine Regelvorrichtung für eine Zuluft-Konditionieranlage, welche mindestens zwei Aktoren zur Beeinflussung der Temperatur und der Feuchte von einem Arbeitsraum zuzuführender Zuluft umfaßt, wobei die Regelvorrichtung für jeden Aktor einen diesem Aktor zugeordneten Regler aufweist, durch welchen der jeweilige Aktor in Abhängigkeit von jeweils einer Reglereingangsgröße regelbar ist.

Solche Verfahren und Regelvorrichtungen sind aus dem Stand der Technik bekannt.

Bekannt sind insbesondere Verfahren zum Regeln einer Zuluft-Konditionieranlage, welche ein Kaltwasser-Ventil, das auf eine Kühlung einer solchen Zuluft-Konditionieranlage wirkt, ein Heißwasser-Ventil, das auf eine Heizung einer solchen Zuluft-Konditionieranlage wirkt, und eine Befeuchterpumpe, die auf einen Befeuchter einer solchen Zuluft-Konditionieranlage wirkt, umfaßt, wobei das Kaltwasser-Ventil, das Heißwasser-Ventil und die Befeuchterpumpe durch jeweils einen dem Kaltwasser-Ventil, dem Heißwasser-Ventil bzw. der Befeuchterpumpe zugeordneten Regler in Abhängigkeit von jeweils einer Sollwertabweichung als Reglereingangsgröße geregelt werden.

Hierbei wird dem Regler der Befeuchterpumpe als Reglereingangsgröße eine Feuchte-Sollwertabweichung aufgegeben, welche durch Bildung der Differenz eines Feuchte-Sollwerts und eines Feuchte-Meßwerts, der mittels eines mit der Zuluft in Kontakt stehenden Feuchtesensors ermittelt wird, gebildet wird.

Im Rahmen dieser Beschreibung und der beigefügten Ansprüche steht der Begriff "Feuchte" als Oberbegriff sowohl für den Begriff "absolute Feuchte" als auch für den Begriff "relative Feuchte", soweit sich aus dem Zusammenhang nichts anderes ergibt.

Ferner wird bei den bekannten Verfahren dem Regler des Heißwasser-Ventile als Reglereingangsgröße eine Temperatur-Sollwertabweichung aufgegeben, welche durch Bildung der Differenz aus einem Temperatur-Sollwert und einem Temperatur-Meßwert, der mittels eines mit der Zuluft in Kontakt stehenden Temperatursensors ermittelt wird, gebildet wird.

Ferner wird bei dem bekannten Verfahren dem Regler des Kaltwasser-Ventile entweder eine in der vorstehend beschriebenen Weise gebildete Temperatur-Sollwertabweichung oder eine in der vorstehend beschriebenen Weise gebildete Feuchte-Sollwertabweichung aufgegeben.

Es kann auch vorgesehen sein, daß für das Kaltwasser-Ventil zwei Regler vorhanden sind, wobei dem einen Regler als Reglereingangsgröße eine Temperatur-Sollwertabweichung und dem anderen Regler als Reglereingangsgröße eine Feuchte-Sollwertabweichung aufgegeben wird. Zu jedem Zeitpunkt wird dabei das Kaltwasser-Ventil ausschließlich durch einen dieser beiden Regler geregelt. Die Umschaltung zwischen den beiden Reglern erfolgt entweder manuell oder automatisch beim Über- oder Unterschreiten eines Schwellenwerts der Außenlufttemperatur oder der Außenluftfeuchte oder automatisch bei Unter- oder Überschreiten eines Schwellenwerts der Zulufttemperatur oder der Zuluftfeuchte.

Wenn die Umschaltung automatisch beim Unter- oder Überschreiten eines Schwellenwerts der Außenlufttemperatur oder der Außenluftfeuchte erfolgt, ist für diese Umschaltung ein zusätzlicher Temperatursensor bzw. Feuchtesensor, der mit der Außenluft in Kontakt steht, erforderlich. Dies erhöht den für die Regelung der Zuluft-Konditionieranlage erforderlichen appartiven Aufwand und bringt das Problem mit sich, daß die Temperatur- und Feuchtesensoren für die Zuluft einerseits und für die Außenluft andererseits unterschiedlich kalibriert sein können.

Die abrupte Umschaltung des Kaltwasser-Ventils von einer Temperatur-Sollwertabweichungs-abhängigen Regelung zu einer Feuchte-Sollwertabweichungs-abhängigen Regelung und zurück wirkt sich nachteilig auf das Regelungsverhalten aus. Beim Umschalten zwischen den beiden Reglern für das Kaltwasser-Ventil kann nicht in jedem Falle gewährleistet werden, daß die vorgegebenen Sollwert-Toleranzen nicht überschritten werden. Erfolgt die Umschaltung in Abhängigkeit von einem gemessenen Außenlufttemperatur- oder Außenluftfeuchte-Wert, so können undefinierte Zustände der Regelung auftreten, wenn die Temperatur- und/oder Feuchtesensoren für die Außenluft einerseits und für die Zuluft andererseits unterschiedlich kalibriert sind.

Ferner ist es durch das Vorhandensein dreier getrennter Regelkreise für das Kühlen, Heizen und Befeuchten der Zuluft bei den bekannten Verfahren nicht möglich, die Regelung der Zuluft-Konditionieranlage im Hinblick auf den Energieverbrauch und die aufzuwendenden Energiekosten zu optimieren.

Der vorliegenden Erfindung liegt daher die Aufgabe zugrunde, ein Verfahren zum Regeln einer Zuluft-Konditionieranlage der eingangs genannten Art zu schaffen, das es ermöglicht, auch bei starken Veränderungen der Außenlufttemperatur und/oder der Außenluftfeuchte die Zulufttemperatur und die Zuluftfeuchte zuverlässig innerhalb eines vorgegebenen Prozeßfensters zu halten.

Das Prozeßfenster ist dabei durch vorgegebene Minimal- und Maximalwerte für die Zulufttemperatur und für die Zuluftfeuchte definiert.

Diese Aufgabe wird bei einem Verfahren mit den Merkmalen des Oberbegriffs von Anspruch 1 erfindungsgemäß dadurch gelöst, daß mindestens eine der Reglereingangsgrößen als gemischte Reglereingangsgröße durch Verknüpfung einer Temperatur-Sollwertabweichung mit einer Feuchte-Sollwertabweichung gebildet wird.

Durch diese Verkopplung der Temperatur-Sollwertabweichung mit der Feuchte-Sollwertabweichung bei der Bildung der Reglereingangsgrößen entfällt die Notwendigkeit, die Regelung eines der Aktoren der Zuluft-Konditionieranlage von einer Temperatur-Sollwertabweichungs-abhängigen Regelung diskontinuierlich auf eine Feuchte-Sollwertabweichungs-abhängige Regelung umzuschalten. Während des Regelvorgangs treten daher bei dem erfindungsgemäßen Verfahren keine abrupten Übergänge auf, so daß die Einhaltung des vorgegebenen Prozeßfensters jederzeit gewährleistet ist.

Ferner entfällt die Notwendigkeit einer manuellen Umschaltung der Regelung oder die Notwendigkeit, zur Ermittlung der Parameter für eine automatische Umschaltung zusätzliche Sensoren vorzusehen.

Da beim erfindungsgemäßen Verfahren keine Außenlufttemperatur-Sensoren oder Außenluftfeuchte-Sensoren erforderlich sind, entfallen auch alle Probleme, die mit einer unterschiedlichen Kalibrierung von Außenlufttemperatur- und Außenluftfeuchte-Sensoren einerseits und Zulufttemperatur- und Zuluftfeuchte-Sensoren andererseits verbunden sein können.

Der Zulufttemperatur-Sensor und der Zuluftfeuchte-Sensor können in einem einzigen Meßgerät vereinigt sein.

Da bei dem erfindungsgemäßen Verfahren eine Verkopplung der Temperatur-Sollwertabweichung mit der Feuchte-Sollwertabweichung lediglich zur Bildung mindestens einer der Reglereingangsgrößen vorgenommen wird, im übrigen aber weiterhin jeder Aktor der Zuluft-Konditionieranlage durch einen diesem Aktor jeweils zugeordneten Regler geregelt wird, können auch beim erfindungsgemäßen Verfahren übliche PI-Regler zur Regelung der Aktoren der Zuluft-Konditionieranlage eingesetzt werden. Ein solcher PI-Regler gibt an den von ihm geregelten Aktor ein Ausgangssignal oder eine Stellgröße aus, welche sowohl von der aktuellen Reglereingangsgröße als auch vom zeitlichen Integral der Reglereingangsgröße abhängt.

Die Möglichkeit zur Optimierung jedes der Regler in Bezug auf das Regelverhalten der Regelstrecke bleibt somit beim erfindungsgemäßen Verfahren erhalten.

Zur Art der Verknüpfung der Temperatur-Sollwertabweichung mit der Feuchte-Sollwertabweichung wurden bislang noch keine näheren Angaben gemacht.

So kann beispielsweise vorgesehen sein, daß die gemischte Reglereingangsgröße durch Ermittlung einer gewichteten Summe aus der Temperatur-Sollwertabweichung und der Feuchte-Sollwertabweichung gebildet wird.

Bei einer bevorzugten Ausgestaltung des erfindungsgemäßen Verfahrens wird dadurch, daß die Reglereingangsgröße mindestens eines der Regler auf den Wert null gesetzt wird, wenn sich der diesem Regler zugeordnete Aktor in einer Endlage befindet und das Vorzeichen der Reglereingangsgröße eine Verstellung des Aktors über die Endlage hinaus verlangen würde, erreicht, daß der betreffende Regler nur solche Ausgangssignale an den ihm zugeordneten Aktor ausgibt, welche von diesem Aktor auch tatsächlich umgesetzt werden können.

Unter einer "Endlage" ist dabei hier und im folgenden eine Ruhelage oder eine Maximallage eines Aktors zu verstehen.

Ein Ventil befindet sich in seiner Ruhelage, wenn es vollständig geschlossen ist, und in seiner Maximallage, wenn es vollständig geöffnet ist.

Eine Pumpe befindet sich in ihrer Ruhelage, wenn sie mit einer Frequenz unterhalb einer vorgegebenen Minimalfrequenz läuft, und in ihrer Maximallage, wenn sie mit einer Frequenz oberhalb einer vorgegebenen Maximalfrequenz läuft.

Wenn mindestens drei Aktoren der Zuluft-Konditionieranlage durch jeweils einen zugeordneten Regler geregelt werden, so ist es von Vorteil, wenn die Reglereingangsgröße mindestens eines der Regler auf den Wert null gesetzt wird, wenn sich mindestens zwei der Aktoren, die den übrigen Reglern zugeordnet sind, außerhalb ihrer Ruhelage befinden. Auf diese Weise wird erreicht, daß kein zusätzlicher Aktor "eingeschaltet", das heißt aus seiner Ruhelage hinaus bewegt wird, wenn bereits mindestens zwei der übrigen Aktoren "eingeschaltet" sind, das heißt sich außerhalb ihrer Ruhelage befinden. Hierdurch wird die Anzahl der gleichzeitig aktiven Aktoren und somit die von der Zuluft-Konditionieranlage benötigte Leistungsaufnahme begrenzt.

Als besonders günstig hat es sich erwiesen, wenn die Zuluft-Konditionieranlage genau drei Aktoren umfaßt, die durch jeweils einen zugeordneten Regler geregelt werden, und wenn die Reglereingangsgröße eines der Regler auf den Wert null gesetzt wird, wenn sich die den beiden übrigen Reglern zugeordneten Aktoren außerhalb ihrer Ruhelage befinden.

Bei einer bevorzugten Ausgestaltung des erfindungsgemäßen Verfahrens ist vorgesehen, daß ein Temperatur-Sollwert und/oder ein Feuchte-Sollwert während des Regelungsvorgangs verändert werden. Durch eine Anpassung des Temperatur-Sollwerts und des Feuchte-Sollwerts an den jeweils herrschenden Außenluftzustand und an den Betriebszustand der Zuluft-Konditionieranlage kann der Betrieb der Zuluft-Konditionieranlage hinsichtlich des Energieverbrauchs und der Energiekosten optimiert werden. Es kann vorkommen, daß die Leistung der Kühlung, der Heizung oder des Befeuchters der Zuluft-Konditionieranlage nicht ausreicht, um einen erwünschten Zuluftzustand zu erreichen. Bei festgehaltenen Sollwerten würden sich in einem solchen Fall permanente Sollwertabweichungen in den Reglern so weit aufintegrieren, daß die Ausgangssignale der Regler schließlich Im wesentlichen nur noch durch die zeitlich aufintegrierten Werte der Reglereingangsgrößen und praktisch nicht mehr von den aktuellen Werten der Reglereingangsgrößen bestimmt werden, was eine unerwünscht große Trägheit der Regelung zur Folge hätte. Dies wird durch die Anpassung des Temperatur- und/oder des Feuchte-Sollwerts verhindert.

Ferner wird es durch die Sollwertanpassung möglich, eine Prioritätenfolge der Sollwerte festzulegen, so daß bei Überlastung der Zuluft-Konditionieranlage der Sollwert mit höherer Priorität festgehalten und der jeweils andere Sollwert entsprechend der Kapazität der Zuluft-Konditionieranlage angepaßt, d.h. erhöht oder erniedrigt, wird.

Für die Durchführung einer Sollwert-Erhöhung kommen unterschiedliche auslösende Bedingungen in Betracht.

So kann vorgesehen sein, daß, wenn einer der Aktoren auf einen Befeuchter der Zuluft-Konditionieranlage wirkt, eine Sollwert-Erhöhung durchgeführt wird, wenn dieser Aktor sich in seiner Ruhelage befindet. Dadurch wird eine Sollwert-Erhöhung bewirkt, wenn der Befeuchter der Zuluft-Konditionieranlage inaktiv ist.

Der auf den Befeuchter der Zuluft-Konditionieranlage wirkende Aktor kann insbesondere eine Befeuchterpumpe sein.

Alternativ oder ergänzend zu der vorstehenden auslösenden Bedingung für eine Sollwert-Erhöhung kann vorgesehen sein, daß, wenn einer der Aktoren der Zuluft-Konditionieranlage auf eine Kühlung der Zuluft-Konditionieranlage wirkt, eine Sollwert-Erhöhung dann durchgeführt wird, wenn dieser Aktor sich außerhalb seiner Ruhelage befindet und zugleich der aktuelle Temperatur-Sollwert kleiner ist als oder gleich groß ist wie eine vorgegebene Mindesttemperatur für das Einschalten der Kühlung. Hierdurch wird erreicht, daß nach der erfolgten Sollwert-Erhöhung die Kühlleistung reduziert werden kann, was im Hinblick auf die Minimierung der Energiekosten der Zuluft-Konditionieranlage von Vorteil ist, da das Kühlen der Zuluft höhere Energiekosten verursacht als das Heizen oder Befeuchten derselben.

Wenn einer der Aktoren der Zuluft-Konditionieranlage auf eine Kühlung der Zuluft-Konditionieranlage wirkt, so ist es von Vorteil, wenn eine Sollwert-Erhöhung dann durchgeführt wird, wenn sich dieser Aktor in seiner Maximallage befindet.

Der auf die Kühlung wirkende Aktor kann beispielsweise ein Kaltwasser-Ventil sein. Ein solches Kaltwasser-Ventil befindet sich in seiner Maximallage, wenn es vollständig geöffnet ist. Wenn sich der auf die Kühlung der Zuluft-Konditionieranlage wirkende Aktor in seiner Maximallage befindet, ist dies ein Anzeichen dafür, daß die zur Verfügung stehende Kühlleistung nicht ausreicht, um den aktuellen Temperatur-Sollwert und/oder den aktuellen Feuchte-Sollwert zu erreichen. Es ist daher günstig, in einem solchen Fall eine Erhöhung eines der genannten Sollwerte durchzuführen, um zu verhindern, daß die Ausgangssignale der Regler im wesentlichen durch zeitlich aufintegrierte große Sollwertabweichungen bestimmt werden und nur noch in geringem Maße von den aktuellen Sollwertabweichungen abhängen, was eine unerwünscht große Trägheit der Regelung zur Folge hätte.

Bislang wurden noch keine Angaben dazu gemacht, welcher Sollwert bei Vorliegen der vorstehend genannten auslösenden Bedingungen für eine Sollwert-Erhöhung erhöht wird.

Bei einer bevorzugten Ausgestaltung des erfindungsgemäßen Verfahrens ist vorgesehen, daß bei einer Sollwert-Erhöhung der Feuchte-Sollwert erhöht wird, wenn der aktuelle Temperatur-Sollwert größer ist als oder gleich groß ist wie ein vorgegebener erster Temperatur-Maximalwert und zugleich der aktuelle Feuchte-Sollwert kleiner ist als ein vorgegebener Feuchte-Maximalwert, und daß sonst der Temperatur-Sollwert statt des Feuchte-Sollwerts erhöht wird. Hierdurch wird erreicht, daß der Feuchte-Sollwert in keinem Fall über den vorgegebenen Feuchte-Maximalwert hinaus erhöht wird, so daß die Nichtüberschreitung des vorgegebenen Feuchte-Maximalwerts in der Regelung höchste Priorität erhält. Ferner wird durch diese Maßnahme erreicht, daß, solange der vorgegebene erste Temperatur-Maximalwert noch nicht erreicht ist, der Temperatur-Sollwert statt des Feuchte-Sollwerts erhöht wird; dies ist von Vorteil, weil durch eine Erhöhung des Temperatur-Sollwerts die erforderliche Kühlleistung reduziert werden kann, was im Hinblick auf eine Energiekosten-optimierte Regelung von Vorteil ist, da die Kühlung der Zuluft-Konditionieranlage in der Regel höhere Energiekosten als die Heizung oder der Befeuchter verursacht.

Vorteilhafterweise wird der Temperatur-Sollwert jedoch nicht weiter erhöht, wenn der erhöhte Temperatur-Sollwert einen zweiten Temperatur-Maximalwert übersteigen würde. Dadurch ist gewährleistet, daß bei Überschreiten des zweiten Temperatur-Maximalwerts große Temperatur-Sollwertabweichungen auftreten, so daß die Rückführung der Zulufttemperatur unter den zweiten Temperatur-Maximalwert von der Regelung beschleunigt durchgeführt wird.

Alternativ zu einer Sollwert-Erhöhung kann eine Sollwert-Erniedrigung durchgeführt werden, wenn eine der folgenden auslösenden Bedingungen erfüllt ist.

So ist es, wenn ein erster Aktor auf einen Befeuchter der Zuluft-Konditionieranlage und ein zweiter Aktor auf eine Heizung der Zuluft-Konditionieranlage wirkt, günstig, wenn eine Sollwert-Erniedrigung durchgeführt wird, wenn sich der auf den Befeuchter wirkende Aktor und der auf die Heizung wirkende Aktor beide außerhalb ihrer Ruhelagen befinden und zugleich der aktuelle Temperatur-Sollwert größer ist als ein vorgegebener Temperatur-Minimalwert. Hierdurch wird erreicht, daß die Heizung und der Befeuchter der Zuluft-Konditionieranlage nicht unnötig betrieben werden, wenn die Einhaltung des Temperatur-Minimalwerts gesichert ist.

Wenn einer der Aktoren auf eine Kühlung der Zuluft-Konditionieranlage wirkt, ist es von Vorteil, wenn eine Sollwert-Erniedrigung durchgeführt wird, wenn sich dieser Aktor außerhalb seiner Maximallage befindet und zugleich der Temperatur-Sollwert größer ist als eine vorgegebene Mindesttemperatur für das Einschalten der Kühlung. Hierdurch ist gewährleistet, daß die Kühlleistung der Zuluft-Konditionieranlage im Bereich oberhalb der Mindesttemperatur für das Einschalten der Kühlung optimal ausgenutzt wird.

Bislang wurden noch keine näheren Angaben dazu gemacht, welcher Sollwert im Falle einer Sollwert-Erniedrigung erniedrigt wird.

Bei einer bevorzugten Ausgestaltung des erfindungsgemäßen Verfahrens ist vorgesehen, daß bei der Sollwert-Erniedrigung der Feuchte-Sollwert erniedrigt wird, wenn der aktuelle Temperatur-Sollwert kleiner ist als oder gleich groß ist wie ein vorgegebener erster Temperatur-Maximalwert und zugleich der aktuelle Feuchte-Sollwert größer ist als ein vorgegebener Feuchte-Minimalwert, und daß sonst der Temperatur-Sollwert erniedrigt wird. Durch diese Maßnahme ist gewährleistet, daß der Feuchte-Sollwert keinesfalls auf einen Wert unterhalb des vorgegebenen Feuchte-Minimalwerts gesetzt wird, so daß die Einhaltung des vorgegebenen Feuchte-Minimalwerts höchste Priorität erhält. Ferner wird erreicht, daß, solange der vorgegebene erste Temperatur-Maximalwert noch nicht erreicht ist, vor einer Temperatur-Sollwert-Erniedrigung erst der Feuchte-Sollwert herabgesetzt wird, was im Hinblick auf eine Energiekosten-optimierte Regelung von Vorteil ist, da eine stärkere Kühlung der Zuluft höhere Energiekosten verursacht als deren Heizung oder Befeuchtung.

Bei einer Sollwert-Erhöhung oder -Erniedrigung kann vorgesehen sein, daß der betreffende Sollwert um eine vorgegebene Sollwert-Schrittweite erhöht bzw. erniedrigt wird.

Alternativ hierzu kann vorgesehen sein, daß eine Folge von Sollwertpaaren vorgegeben ist und die Sollwerte des aktuellen Sollwertpaars bei Vorliegen einer der Bedingungen für eine Sollwert-Erhöhung durch die Sollwerte des dem aktuellen Sollwertpaar in der Folge nachfolgenden Sollwertpaares ersetzt werden und daß die Sollwerte des aktuellen Sollwertpaars bei Vorliegen einer der Bedingungen für eine Sollwert-Erniedrigung durch die Sollwerte des dem aktuellen Sollwertpaar in der Folge vorausgehenden Sollwertpaars ersetzt werden.

Wenn einer der Aktoren der Zuluft-Konditionieranlage auf eine Kühlung der Zuluft-Konditionieranlage wirkt, hat es sich als besonders günstig erwiesen, wenn die Reglereingangsgröße des diesem Aktor zugeordneten Reglers durch Verknüpfung der Temperatur-Sollwertabweichung mit der Feuchte-Sollwertabweichung gebildet wird.

Der vorliegenden Erfindung liegt die weitere Aufgabe zugrunde, eine Regelvorrichtung für eine Zuluft-Konditionieranlage der eingangs genannten Art zu schaffen, die es ermöglicht, auch bei starken Veränderungen der Außenlufttemperatur und/oder der Außenluftfeuchte die Zulufttemperatur und die Zuluftfeuchte zuverlässig innerhalb eines vorgegebenen Prozeßfensters zu halten.

Diese Aufgabe wird bei einer Regelvorrichtung mit den Merkmalen des Oberbegriffs von Anspruch 17 erfindungsgemäß dadurch gelöst, daß die Regelvorrichtung eine Verarbeitungseinheit umfaßt, mittels welcher mindestens eine der Reglereingangsgrößen als gemischte Reglereingangsgröße durch Verknüpfung einer Temperatur-Sollwertabweichung mit einer Feuchte-Sollwertabweichung bildbar ist.

Durch diese Verkopplung der Temperatur-Sollwertabweichung mit der Feuchte-Sollwertabweichung bei der Bildung der Reglereingangsgrößen entfällt die Notwendigkeit, einen der Aktoren der Zuluft-Konditionieranlage von einem Temperatur-Sollwertabweichungs-abhängigen Regler auf einen Feuchte-Sollwertabweichungs-abhängigen Regler umzuschalten. Beim Betrieb der erfindungsgemäßen Regelvorrichtung treten daher keine abrupten Übergänge auf, so daß die Einhaltung des vorgegebenen Prozeßfensters jederzeit gewährleistet ist.

Besondere Ausgestaltungen der erfindungsgemäßen Regelvorrichtung sind Gegenstand der abhängigen Ansprüche 18 bis 32, deren Vorteile bereits vorstehend im Zusammenhang mit den besonderen Ausgestaltungen des erfindungsgemäßen Verfahrens erläutert worden sind.

Anspruch 33 ist auf eine Zuluft-Konditionieranlage gerichtet, welche mindestens zwei Aktoren zur Beeinflussung der Temperatur und der Feuchte von einem Arbeitsraum zuzuführender Zuluft und eine erfindungsgemäße Regelvorrichtung umfaßt.

Weitere Merkmale und Vorteile der Erfindung sind Gegenstand der nachfolgenden Beschreibung eines Ausführungsbeispiels.

In den Zeichnungen zeigen:

Fig. 1      ein Blockschaltbild einer Zuluft-Konditionieranlage, welche eine Kühlung, eine Heizung und einen Befeuchter umfaßt sowie eine Regelvorrichtung, welche drei Aktoren regelt, die auf die Kühlung, die Heizung bzw. den Befeuchter wirken;

Fig. 2      ein H-x-Diagramm, in dem Regelungsparameter der Regelvorrichtung graphisch dargestellt sind;

Fig. 3    ein H-x-Diagramm, in dem ein simulierter, im Uhrzeigersinn durchlaufener Außenluft-Zustandszyklus und ein erwünschter Zuluft-Zustandsverlauf bei ausreichender Kühlleistung der Zuluft-Konditionieranlage dargestellt sind;

Fig. 4    ein H-x-Diagramm, in dem ein simulierter, im Uhrzeigersinn durchlaufener Außenluft-Zustandszyklus und ein tatsächlicher Zuluft-Zustandsverlauf bei ausreichender Kühlleistung der Zuluft-Konditionieranlage dargestellt sind;

Fig. 5    ein Schaubild, das den zeitlichen Verlauf der Außenlufttemperatur, der Zulufttemperatur und des Temperatur-Sollwerts sowie den zeitlichen Verlauf der Außenluftfeuchte, der Zuluftfeuchte und des Feuchte-Sollwerts während des in den Fig. 3 und 4 dargestellten Außenluft-Zustandszyklus darstellt;

Fig. 6    ein H-x-Diagramm, das einen simulierten, im Gegenuhrzeigersinn durchlaufenen Außenluft-Zustandszyklus und einen tatsächlichen Zuluft-Zustandsverlauf bei ausreichender Kühlleistung der Zuluft-Konditionieranlage darstellt;

Fig. 7    ein Schaubild, das den zeitlichen Verlauf der Außenlufttemperatur, der Zulufttemperatur und des Temperatur-Sollwerts sowie den zeitlichen Verlauf der Außenluftfeuchte, der Zuluftfeuchte und des Feuchte-Sollwerts während des in Fig. 6 dargestellten Außenluft-Zustandszyklus darstellt;

Fig. 8    ein H-x-Diagramm, das einen simulierten, im Uhrzeigersinn durchlaufenen Außenluft-Zustandszyklus und einen erwünschten Zuluft-Zustandsverlauf bei nicht ausreichender Kühlleistung der Zuluft-Konditionieranlage darstellt;

Fig. 9    ein H-x-Diagramm, das einen simulierten, im Uhrzeigersinn durchlaufenen Außenluft-Zustandszyklus und einen tatsächlichen Zuluft-Zustandsverlauf bei nicht ausreichender Kühlleistung der Zuluft-Konditionieranlage darstellt;

Fig. 10    ein Schaubild, das den zeitlichen Verlauf der Außenlufttemperatur, der Zulufttemperatur und des Temperatur-Sollwerts sowie der Außenluftfeuchte, der Zuluftfeuchte und des Feuchte-Sollwerts während des in den Fig. 8 und 9 dargestellten Außenluft-Zustandszyklus darstellt;

Fig. 11    ein H-x-Diagramm, das einen simulierten, im Gegenuhrzeigersinn durchlaufenen Außenluft-Zustandszyklus und einen tatsächlichen Zuluft-Zustandsverlauf bei nicht ausreichender Kühlleistung der Zuluft-Konditionieranlage darstellt; und

Fig. 12    ein Schaubild, das den zeitlichen Verlauf der Außenlufttemperatur, der Zulufttemperatur und des Temperatur-Sollwerts sowie den zeitlichen Verlauf der Außenluftfeuchte, der Zuluftfeuchte und des Feuchte-Sollwerts während des in Fig. 11 dargestellten Außenluft-Zustandszyklus darstellt.

Gleiche oder funktional äquivalente Elemente sind in allen Figuren mit denselben Bezugszeichen bezeichnet.

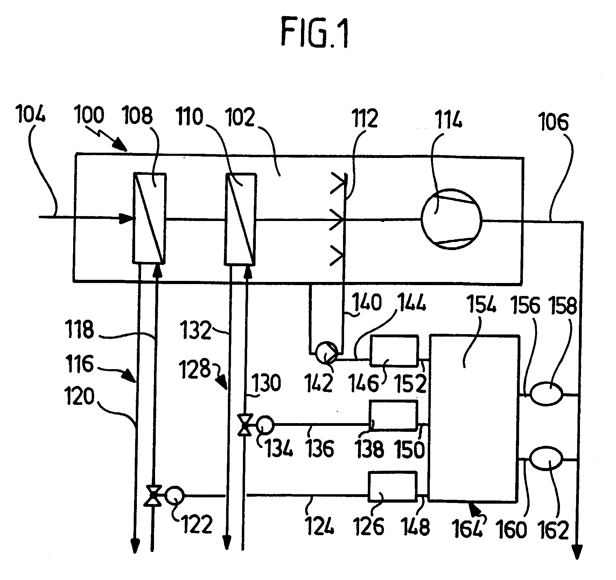

Eine in Fig. 1 dargestellte, als Ganzes mit 100 bezeichnete Zuluft-Konditionieranlage umfaßt einen Zuluft-Konditionierbereich 102, dem über eine Außenluft-Zuführleitung 104 zu konditionierende Außenluft zugeführt und über eine Zuluft-Zuführleitung 106 konditionierte Zuluft entnommen wird, um diese Zuluft einem Arbeitsraum, beispielsweise einer Lackierkabine einer Lackieranlage, zuzuführen.

Der Zuluft-Konditionierbereich 102 umfaßt ein Kühlregister 108, ein Heizregister 110, einen Befeuchter 112 und ein Zuluftgebläse 114, welche in dem Zuluft-Konditionierbereich 102 in dieser Reihenfolge längs der Strömungsrichtung der Luft hintereinander angeordnet sind.

Das Kühlregister 108 bildet einen Bestandteil eines Kaltwasser-Kreislaufs 116, welcher eine Kaltwasser dem Kühlregister zuführende Kaltwasser-Zuführleitung 118 und eine Kaltwasser aus dem Kühlregister 108 abführende Kaltwasser-Abführleitung 120 umfaßt.

In der Kaltwasser-Zuführleitung 118 ist ein (beispielsweise elektromotorisch) verstellbares Kaltwasser-Ventil 122 angeordnet, das von einer Ruhelage des Kaltwasser-Ventils 122, in welcher das Kaltwasser-Ventil 122 die Kaltwasser-Zuführleitung 118 vollständig sperrt, bis zu einer Maximallage, in welcher das Kaltwasser-Ventil 122 den Durchgang durch die Kaltwasser-Zuführleitung 118 vollständig freigibt, kontinuierlich oder in diskreten Stufen verstellbar ist.

Das Kaltwasser-Ventil 122 ist über eine Regelleitung 124 an einen Ausgang eines ersten Reglers 126 angeschlossen. Über die Regelleitung 124 gibt der erste Regler 126 Ausgangssignale an das Kaltwasser-Ventil 122 aus, denen jeweils eine bestimmte Stellung des Kaltwasser-Ventils 122 zugeordnet ist.

Das Heizregister 110 bildet einen Bestandteil eines Heißwasser-Kreislaufs 128, der eine Heißwasser dem Heizregister 110 zuführende Heißwasser-Zuführleitung 130 und eine Heißwasser aus dem Heizregister 110 abführende Heißwasser-Abführleitung 132 umfaßt.

In der Heißwasser-Zuführleitung 130 ist ein (beispielsweise elektromotorisch) verstellbares Heißwasser-Ventil 134 angeordnet, das von einer Ruhelage, in welcher das Heißwasser-Ventil 134 die Heißwasser-Zuführleitung 130 vollständig verschließt, bis zu einer Maximallage, in welcher das Heißwasser-Ventil 134 die Heißwasser-Zuführleitung 130 vollständig freigibt, kontinuierlich oder in diskreten Stufen verstellbar ist.

Das Heißwasser-Ventil 134 ist über eine Regelleitung 136 an einen Ausgang eines zweiten Reglers 138 angeschlossen. Über die Regelleitung 136 gibt der zweite Regler 138 Ausgangssignale an das Heißwasser-Ventil 134 aus, denen jeweils eine bestimmte Stellung des Heißwasser-Ventils 134 zugeordnet ist.

Der Befeuchter 112 ist an eine Wasserzuführleitung 140 angeschlossen, in welcher eine Befeuchterpumpe 142 angeordnet ist, welche von einer Ruhelage, in welcher die Drehfrequenz der Befeuchterpumpe 142 kleiner ist als ein vorgegebener Frequenz-Minimalwert von beispielsweise 10 Hz, bis zu einer Maximallage, in welcher die Drehfrequenz der Befeuchterpumpe 142 größer ist als ein Frequenz-Maximalwert von beispielsweise 55 Hz, kontinuierlich oder in Stufen verstellbar ist.

Die Befeuchterpumpe 142 ist über eine Regelleitung 144 an einen Ausgang eines dritten Reglers 146 angeschlossen. Über die Regelleitung 144 gibt der dritte Regler 146 Ausgangssignale an die Befeuchterpumpe 142 aus, denen jeweils eine bestimmte Frequenz der Befeuchterpumpe 142 zugeordnet ist.

Bei den Reglern 126, 138 und 146 handelt es sich um an sich bekannte PI-Regler.

Ein solcher PI-Regler weist üblicherweise zwei Eingänge auf, wobei in der Regel dem ersten Eingang ein aktueller Istwert einer Regelgröße und dem zweiten Eingang ein Sollwert für diese Regelgröße aufgegeben wird. Der PI-Regler regelt den ihm zugeordneten Aktor in Abhängigkeit von der aktuellen Abweichung des Istwerts vom Sollwert der Regelgröße und in Abhängigkeit von der zeitlich aufintegrierten Gesamtabweichung des Istwerts vom Sollwert der Regelgröße so, daß die Abweichung des Istwerts vom Sollwert der Regelgröße möglichst gering wird.

Im vorliegenden Fall sind die ersten Eingänge aller drei Regler 126, 138 und 146 über jeweils eine Verbindungsleitung 148, 150 bzw. 152 an jeweils einen Ausgang einer Verarbeitungseinheit 154 angeschlossen.

Die zweiten Eingänge aller drei Regler 126, 138 und 146 sind permanent auf null gesetzt. Die Regler 126, 138 und 146 regeln die ihnen zugeordneten Aktoren (Kaltwasser-Ventil 122, Heißwasser-Ventil 134 bzw. Befeuchterpumpe 142) somit ausschließlich in Abhängigkeit von jeweils einer Reglereingangsgröße, welche dem betreffenden Regler über die jeweilige Verbindungsleitung 148, 150 bzw. 152 von der Verarbeitungseinheit 154 aufgegeben wird, und zwar so, daß die Abweichung der jeweiligen Reglereingangsgröße vom Wert null möglichst gering wird.

Die Verarbeitungseinheit 154 ist über eine erste Meßleitung 156 mit einem Feuchtesensor 158 verbunden, welcher mit der Zuluft in der Zuluft-Zuführleitung 106 in Kontakt steht und an die Verarbeitungseinheit 154 ein der aktuellen relativen Feuchte dieser Zuluft entsprechendes elektrisches Signal übermittelt.

Ferner steht die Verarbeitungseinheit 154 über eine zweite Meßleitung 160 mit einem Temperatursensor 162 in Verbindung, welcher ebenfalls in Kontakt mit der Zuluft in der Zuluft-Zuführleitung 106 steht und an die Verarbeitungseinheit 154 ein der Temperatur der Zuluft entsprechendes elektrisches Signal übermittelt.

Die Verarbeitungseinheit 154 und die Regler 126, 138 und 146 sind Bestandteile einer als Ganzes mit 164 bezeichneten Regelvorrichtung der Zuluft-Konditionieranlage 100.

In der Verarbeitungseinheit 154 werden die Meßsignale von den Sensoren 158 und 162 mit Informationen über den aktuellen Zustand der Aktoren (Kaltwasser-Ventil 122, Heißwasser-Ventil 134 und Befeuchterpumpe 142) sowie mit Regelungsparametern, welche der Verarbeitungseinheit 154 fest vorgegeben sind oder der Verarbeitungseinheit 154 über ein (nicht dargestelltes) geeignetes Eingabegerät eingegeben werden können, verknüpft, um die Reglereingangsgrößen zu bilden, welche von der Verarbeitungseinheit 154 an die drei Regler 126, 138 und 146 ausgegeben werden.

Dabei kann die Verarbeitungseinheit 154 entweder als eine fest verdrahtete analoge oder digitale Schaltung oder aber als frei programmierbare Recheneinheit, beispielsweise als Meßrechner oder speicherprogrammierbare Steuerung, mit einer entsprechenden Programmierung ausgebildet sein.

Jeder Arbeitszyklus der Verarbeitungseinheit 154 umfaßt dabei einen Sollwert-Veränderungsschritt, einen darauf folgenden Roh-Reglereingangsgrößen-Bildungsschritt, einen darauf folgenden Endlagenabfrageschritt und einen abschließenden Auswahlschritt.

Im ersten Schritt jedes Arbeitszyklus, dem Sollwert-Veränderungsschritt, wird zunächst geprüft, ob eine Sollwert-Erhöhung durchzuführen ist.

Eine Sollwert-Erhöhung wird durchgeführt, wenn mindestens eine der folgenden Bedingungen erfüllt ist:

- die aktuelle Frequenz FU der Befeuchterpumpe ist kleiner als ein vorgegebener unterer Frequenz-Minimalwert $FU_{s1}$;

- der aktuelle Temperatur-Sollwert T' ist kleiner als oder gleich groß wie eine vorgegebene Mindesttemperatur für das Einschalten der Kühlung $T_K$ und das Kaltwasser-Ventil 122 befindet sich nicht in seiner Ruhelage, ist also zumindest leicht geöffnet;

- das Kaltwasser-Ventil 122 befindet sich in seiner Maximallage, ist also vollständig geöffnet.

Die für das Prüfen der vorstehenden Bedingungen erforderlichen Informationen zum aktuellen Zustand der Aktoren erhält die Verarbeitungseinheit 154 dabei entweder über (nicht dargestellte) Abzweigleitungen von den Regelleitungen 124, 136 und 140 oder, alternativ oder ergänzend hierzu, durch zusätzliche Sensoren, die an den Aktoren angeordnet sind und mit der Verarbeitungseinheit 154 über (nicht dargestellte) Meßleitungen in Verbindung stehen.

Wenn mindestens eine der vorstehend genannten Bedingungen erfüllt ist, wird die Erhöhung eines der Sollwerte durchgeführt. Ob der Feuchte-Sollwert F' oder der Temperatur-Sollwert T' erhöht wird, hängt davon ab, an welcher Stelle des H-x-Diagramms sich das aktuelle Sollwerte-Paar befindet.

Wenn der aktuelle Temperatur-Sollwert T' größer ist als oder gleich groß ist wie ein vorgegebener erster Temperatur-Maximalwert $T_{s2}$ und zugleich der aktuelle Feuchte-Sollwert F' kleiner ist als ein vorgegebener Feuchte-Maximalwert $F_{s2}$, dann wird der Feuchte-Sollwert um die Feuchte-Sollwert-Schrittweite $F_{st}$ erhöht.

Wenn die vorstehend genannte Bedingung für das Erhöhen des Feuchte-Sollwerts nicht erfüllt ist, so wird bei der Sollwert-Erhöhung der Temperatur-Sollwert T' um die Temperatur-Sollwert-Schrittweite $T_{st}$ erhöht.

Da der Temperatur-Sollwert jedoch auf keinen Fall einen vorgegebenen zweiten Temperatur-Maximalwert $T_{s4}$ überschreiten soll, wird keine Erhöhung des Temperatur-Sollwerts T' durchgeführt, wenn der erhöhte Temperatur-Sollwert größer wäre als der zweite Temperatur-Maximalwert $T_{s4}$. Der zweite Temperatur-Maximalwert $T_{s4}$ wird möglichst hoch gewählt, damit durch die Regelvorrichtung eine Sollwertanpassung innerhalb eines möglichst weiten Temperaturbereichs durchgeführt werden kann.

Anschließend wird von der Verarbeitungseinheit 154 geprüft, ob eine Sollwert-Erniedrigung durchzuführen ist.

Eine Sollwert-Erniedrigung wird durchgeführt, wenn mindestens eine der folgenden Bedingungen erfüllt ist:

- die aktuelle Frequenz FU der Befeuchterpumpe ist größer als ein oberer Frequenz-Minimalwert $FU_{s2}$ und der aktuelle Temperatur-Sollwert T' ist größer als ein vorgegebener Temperatur-Minimalwert $T_{s1}$ und das Heißwasser-Ventil 134 befindet sich außerhalb seiner Ruhelage, das heißt das Heißwasser-Ventil 134 ist nicht vollständig geschlossen;
- der aktuelle Temperatur-Sollwert T' ist größer als die vorgegebene Mindesttemperatur für die Kühlung $T_K$ und das Kaltwasser-Ventil 122 befindet sich nicht in seiner Maximallage, das heißt das Kaltwasser-Ventil 122 ist nicht vollständig geöffnet.

Wenn mindestens eine der vorstehend genannten Bedingungen erfüllt ist, so wird eine Sollwert-Erniedrigung durchgeführt.

Ob der Temperatur-Sollwert T' oder der Feuchte-Sollwert F' erniedrigt wird, hängt wiederum davon ab, an welcher Stelle des H-x-Diagramms sich das aktuelle Sollwert-Paar befindet.

Wenn der aktuelle Temperatur-Sollwert T' kleiner ist als oder gleich groß ist wie der erste Temperatur-Maximalwert $T_{s2}$ und zugleich der Feuchte-Sollwert größer ist als ein vorgegebener Feuchte-Minimalwert $F_{s1}$, dann wird der aktuelle Feuchte-Sollwert um die Feuchte-Sollwert-Schrittweite $F_{st}$ erniedrigt.

Wenn die vorstehend genannte Bedingung für die Erniedrigung des Feuchte-Sollwerts nicht erfüllt ist, dann wird statt dessen der Temperatur-Sollwert T' um die Temperatur-Sollwert-Schrittweite $T_{st}$ erniedrigt.

Damit ist der Sollwert-Veränderungsschritt abgeschlossen.

Im darauffolgenden Roh-Reglereingangsgrößen-Bildungsschritt werden aus den aktuellen Sollwerten und den von den Sensoren 158 und 162 übermittelten aktuellen Feuchte- und Temperaturwerten Roh-Reglereingangsgrößen für die Regler 126, 138 und 146 gebildet.

Dabei wird die Roh-Reglereingangsgröße KW für den ersten Regler 126 gemäß der Formel

$$KW = -(T' - T) \cdot KWF1 - (F' - F) \cdot KWF2$$

gebildet, wobei T' den aktuellen Temperatur-Sollwert (in °C), T den aktuellen Temperatur-Meßwert (in °C), F' den aktuellen Feuchte-Sollwert (in %), F den aktuellen Feuchte-Meßwert (in %) und KWF1 sowie KWF2 zwei dimensionslose Gewichtungsfaktoren bezeichnen, welche beispielsweise gleich groß und insbesondere gleich 0,01 gewählt werden können. Die Roh-Reglereingangsgröße KW wird demnach durch Ermittlung einer gewichteten Summe aus der Temperatur-Sollwertabweichung und der Feuchte-Sollwertabweichung gebildet.

Die Roh-Reglereingangsgröße HW für den zweiten Regler 138 wird gemäß der Formel

$$HW = (T' - T) \cdot HWF$$

gebildet, wobei T' den aktuellen Temperatur-Sollwert (in °C), T den aktuellen Temperatur-Meßwert (in °C) und HWF einen dimensionslosen Gewichtungsfaktor bezeichnet, welcher beispielsweise gleich 0,01 gewählt werden kann.

Die Roh-Reglereingangsgröße FEW für den dritten Regler 146 wird gemäß der Formel

$$FEW = (F' - F) \cdot VEWF$$

gebildet, wobei F' den aktuellen Feuchte-Sollwert (in %), F den aktuellen Feuchte-Meßwert (in %) und VEWF einen Gewichtungsfaktor bezeichnet, welcher beispielsweise gleich 0,005 gewählt werden kann.

Damit ist der Roh-Reglereingangsgrößen-Bildungsschritt abgeschlossen.

Im darauf folgenden Endlagenabfrageschritt und im Auswahlschritt werden aus den in der vorstehend geschilderten Weise gebildeten Roh-Reglereingangsgrößen die endgültigen Reglereingangsgrößen, welche an die drei Regler 126, 38 und 146 übergeben werden, gebildet.

Im Endlagenabfrageschritt wird geprüft, ob die Aktoren (Kaltwasser-Ventil 122, Heißwasser-Ventil 134 und Befeuchterpumpe 142) gemäß der in der vorhergehenden Weise bestimmten Roh-Reglereingangsgrößen verstellt werden können. Dies ist nicht der Fall, wenn der betreffende Aktor bereits eine Endlage, das heißt seine Ruhelage oder seine Maximallage, erreicht hat und das Vorzeichen der Roh-Reglereingangsgröße es verlangen würde, daß der betreffende Aktor über seine Endlage hinaus weiter verstellt wird.

Ist beispielsweise die Roh-Reglereingangsgröße KW für den ersten Regler 126 negativ und müßte somit das Kaltwasser-Ventil 122 weiter geschlossen werden, befindet sich das Kaltwasser-Ventil 122 jedoch bereits in seiner Ruhelage, in der das Kaltwasser-Ventil 122 vollständig geschlossen ist, so kann das Kaltwasser-Ventil 122 nicht gemäß der zugeordneten Roh-Reglereingangsgröße verstellt werden. In diesem Fall wird daher die Reglereingangsgröße KW' für den ersten Regler 126 auf den Wert null gesetzt.

Ebenso wird die Reglereingangsgröße KW' für den ersten Regler 126 auf den Wert null gesetzt, wenn die Roh-Reglereingangsgröße KW für den ersten Regler 126 positiv ist und sich das Kaltwasser-Ventil 122 in seiner Maximallage befindet, das heißt vollständig geöffnet ist.

In entsprechender Weise wird die Reglereingangsgröße HW' für den zweiten Regler 138 auf den Wert null gesetzt, wenn die Roh-Reglereingangsgröße HW für den zweiten Regler 138 negativ ist und sich das Heißwasser-Ventil 134 in seiner Ruhelage befindet, das heißt vollständig geschlossen ist.

Ferner wird die Reglereingangsgröße HW' für den zweiten Regler 138 auf den Wert null gesetzt, wenn die Roh-Reglereingangsgröße HW für den zweiten Regler 138 positiv ist und sich das Heißwasser-Ventil 134 in seiner Maximallage befindet, das heißt vollständig geöffnet ist.

In entsprechender Weise wird die Reglereingangsgröße VEW' für den dritten Regler 146 auf den Wert null gesetzt, wenn die Roh-Reglereingangsgröße VEW für den dritten Regler 146 negativ ist und die Befeuchterpumpe 142 sich in der Ruhelage befindet, das heißt die aktuelle Frequenz FU der Befeuchterpumpe kleiner ist als der untere Frequenz-Minimalwert $FU_{s1}$.

Ferner wird die Reglereingangsgröße VEW' für den dritten Regler 146 auf den Wert null gesetzt, wenn die Roh-Reglereingangsgröße VEW für den dritten Regler 146 positiv ist und die Befeuchterpumpe 142 sich in der Maximallage befindet, das heißt wenn die aktuelle Frequenz der Befeuchterpumpe FU größer ist als der Frequenz-Maximalwert $FU_{s3}$.

Damit ist der Endlagenabfrageschritt abgeschlossen.

Im anschließenden Auswahlschritt wird in Bezug auf jeden der Aktoren (Kaltwasser-Ventil 142, Heißwasser-Ventil 134 und Befeuchterpumpe 142) geprüft, ob sich die beiden übrigen Aktoren außerhalb ihrer Ruhelage befinden. Ist dies der Fall, so wird die Reglereingangsgröße des betreffenden Autors auf den Wert null gesetzt.

Durch diese Maßnahme wird erreicht, daß ein zusätzlicher Aktor nur dann "eingeschaltet" wird, das heißt seine Ruhelage verläßt, wenn sich mindestens einer der beiden anderen Aktoren in seiner Ruhelage befindet. Dadurch ist gewährleistet, daß stets nur zwei der drei Aktoren aktiv sind, was zu einer energiesparenden Prozeßführung beiträgt.

Im Auswahlschritt wird demnach die Reglereingangsgröße KW' für den ersten Regler auf den Wert null gesetzt, wenn die aktuelle Frequenz der Befeuchterpumpe FU größer ist als der untere Frequenz-Minimalwert $FU_{s1}$ und zugleich das Heißwasser-Ventil 134 sich außerhalb seiner Ruhelage befindet, das heißt nicht vollständig geschlossen ist.

Ferner wird die Reglereingangsgröße HW' für den zweiten Regler auf den Wert null gesetzt, wenn die aktuelle Frequenz der Befeuchterpumpe FU größer ist als der untere Frequenz-Minimalwert $FU_{s1}$ und zugleich das Kaltwasser-Ventil 122 sich außerhalb seiner Ruhelage befindet, das heißt nicht vollständig geschlossen ist.

Schließlich wird die Reglereingangsgröße VEW' für den dritten Regler auf den Wert null gesetzt, wenn sich das Kaltwasser-Ventil 122 außerhalb seiner Ruhelage befindet, das heißt nicht vollständig geschlossen ist, und zugleich das Heißwasser-Ventil 134 sich außerhalb seiner Ruhelage befindet, das heißt nicht vollständig geschlossen ist.

Sofern eine Reglereingangsgröße weder im Endlagenabfrageschritt noch im Auswahlschritt auf den Wert null gesetzt worden ist, wird diese Reglereingangsgröße auf den Wert der jeweiligen Roh-Reglereingangsgröße gesetzt.

Anschließend werden die Reglereingangsgrößen an den jeweiligen Regler 126, 138 bzw. 146 ausgegeben, worauf die Regler 126, 138 und 146 die ihnen zugeordneten Aktoren in Abhängigkeit von diesen Reglereingangsgrößen regeln.

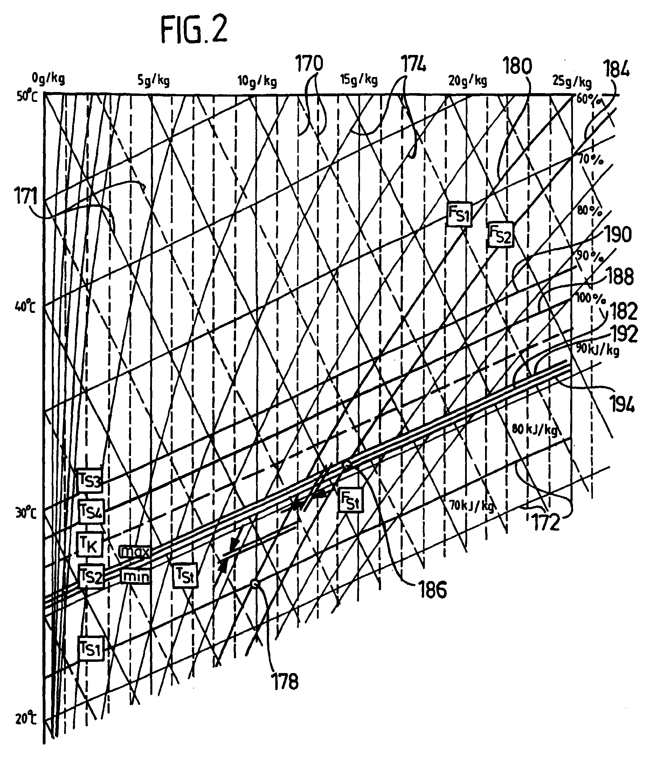

Die vorstehend erwähnten Regelungsparameter sind in dem H-x-Diagramm der Fig. 2 schematisch dargestellt.

Im H-x-Diagramm ist längs der horizontalen x-Richtung die absolute Luftfeuchte x (in g/kg) aufgetragen; vertikale Linien im H-x-Diagramm sind somit Kurven konstanter absoluter Feuchte 170.

Die Kurven konstanter Enthalpie H fallen im H-x-Diagramm von links oben nach rechts unten ab und sind in Fig. 2 mit 171 bezeichnet.

Die Kurven konstanter Temperatur 172 steigen im H-x-Diagramm von links unten nach rechts oben an.

Die Kurven konstanter relativer Feuchte 174 steigen ebenfalls von links unten nach rechts oben an, verlaufen jedoch steiler als die Kurven konstanter Temperatur 172 und sind konkav gekrümmt.

Idealerweise hat die durch die Zuluft-Konditionieranlage 100 konditionierte Zuluft die Feuchte $F_{s1}$ und die Temperatur $T_{s1}$. Der Punkt ($F_{s1}$, $T_{s1}$) ist in Fig. 2 mit dem Bezugszeichen 178 bezeichnet.

Der bei einer Änderung des Außenluftzustands aus Gründen der Prozeßsicherheit und der Energieverbrauchs- und Energiekostenminimierung angestrebte Zuluft-Zustandsverlauf ist der folgende:

Erhöht sich die Temperatur der zugeführten Außenluft oder nimmt deren Feuchte zu, so soll zunächst der Feuchtewert $F_{s1}$ in der Zuluft gehalten werden und nur deren Temperatur ansteigen, so daß sich der Zustandspunkt der Zuluft vom Punkt 178 aus längs der der Feuchte $F_{s1}$ zugeordneten Kurve konstanter relativer Feuchte 180 nach oben bewegt, bis die Kurve 180 die dem ersten Temperatur-Maximalwert $T_{s2}$ zugeordnete Kurve konstanter Temperatur 182 schneidet. Ab Erreichen dieses ersten Temperatur-Maximalwerts soll bei weiterer Erhöhung von Feuchte und/oder Temperatur der Außenluft die Temperatur der Zuluft konstant gehalten und nur deren Feuchte erhöht werden.

Der Zustandspunkt der Zuluft soll daher längs der Kurve konstanter Temperatur 182 weiter nach oben laufen, bis er die dem Feuchte-Maximalwert $F_{s2}$ zugeordnete Kurve konstanter relativer Feuchte 184 erreicht. Der Punkt ($F_{s2}$, $T_{s2}$) ist in Fig. 2 mit dem Bezugszeichen 186 bezeichnet.

Steigen nun Temperatur und/oder Feuchte der Außenluft weiter an und reicht die Kühlleistung der Kühlluft-Konditionieranlage 100 nicht aus, um den Zustand der Zuluft an dem Punkt 186 zu halten, so soll der Zustandspunkt der Zuluft längs der Kurve konstanter relativer Feuchte 184 weiter nach oben laufen, ohne daß sich die relative Feuchte der Zuluft weiter erhöht.

Erreicht der Zustandspunkt der Zuluft die dem zweiten Temperatur-Maximalwert $T_{s4}$ zugeordnete Kurve konstanter Temperatur 188, so wird der aktuelle Temperatur-Sollwert T' nicht mehr weiter erhöht, wie vorstehend bereits beschrieben.

Steigt der Zustandspunkt der Zuluft im H-x-Diagramm weiter an und erreicht die einem Temperatur-Höchstwert $T_{s3}$ zugeordnete Kurve konstanter Temperatur 190, so muß die Zuluft-Konditionieranlage 100 abgeschaltet werden, da die von ihr konditionierte Zuluft nicht mehr geeignet ist, dem Arbeitsraum, beispielsweise der Lackierkabine, zugeführt zu werden.

Außer den bereits genannten Regelungsparametern sind in Fig. 2 die Minimaltemperatur für die Kühlung $T_K$ und die Feuchte-Sollwert-Schrittweite $F_{St}$ sowie die Temperatur-Sollwert-Schrittweite $T_{St}$ dargestellt.

Ferner sind In Fig. 2 zwei Parallelen 192, 194 zur Kurve konstanter Temperatur 182 eingetragen, welche der oberen bzw. der unteren Grenze des Toleranzbereichs für die Temperatur der Zuluft entsprechen, innerhalb dessen die Temperatur der Zuluft durch die Regelvorrichtung 164 gehalten wird, wenn der aktuelle Temperatur-Sollwert T' gleich dem ersten Temperatur-Maximalwert $T_{s2}$ ist.

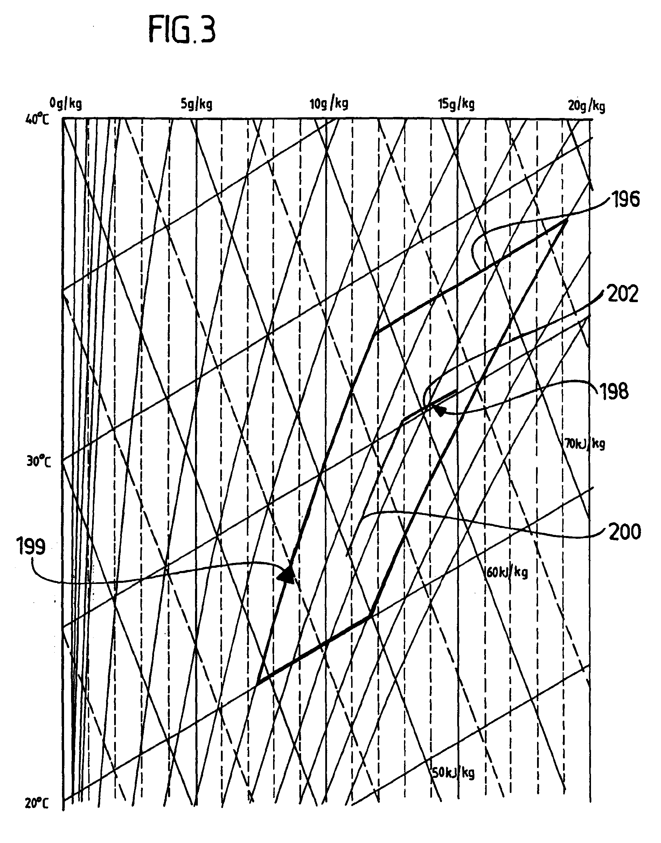

Daß die Regelvorrichtung 164 dazu in der Lage ist, die Aktoren 122, 34 und 142 so zu regeln, daß bei einer Änderung des Außenluftzustandes der Zuluftzustand sich längs der gewünschten Bahnkurve im H-x-Diagramm bewegt, das heißt zunächst vom Punkt 178 längs der Kurve konstanter relativer Feuchte 180 bis zum Schnittpunkt mit der Kurve 182, dann längs der Kurve 182 konstanter Temperatur bis zum Punkt 186 und von dort aus, falls die Kühlleistung der Zuluft-Konditionieranlage 100 nicht ausreicht, längs der Kurve konstanter relativer Feuchte 184 weiter nach oben, wurde durch Computersimulationen der Zuluft-Konditionieranlage 100 überprüft, deren Ergebnisse in den Fig. 3 bis 12 dargestellt sind.

Bei der in den Fig. 3 bis 5 dargestellten ersten Simulation wurde ein Außenluft-Zustandszyklus 196 (siehe Fig. 3) vorgegeben, bei dem, ausgehend von einem Startpunkt mit einer Außenlufttemperatur von 20°C und einer relativen Außenluftfeuchte von 50%, zunächst die Temperatur der Außenluft bei konstanter relativer Feuchte auf 28°C erhöht wurde, anschließend die relative Feuchte der Außenluft bei konstanter Temperatur auf 80% erhöht wurde, anschließend die Temperatur der Außenluft bei konstanter relativer Feuchte auf 20°C erniedrigt wurde und schließlich die relative Feuchte der Außenluft bei konstanter Temperatur auf 50% erniedrigt wurde, um zum Ausgangspunkt des Außenluft-Zustandszyklus zurückzukehren.

Der vorstehend beschriebene Außenluft-Zustandszyklus wird demnach im H-x-Diagramm im Uhrzeigersinn durchlaufen (die Durchlaufrichtung ist in Fig. 3 durch einen Pfeil 199 angegeben). Der für diesen Außenluft-Zustandszyklus erwünschte Zuluft-Zustandsverlauf 198 umfaßt einen ersten Zweig 200, welcher einem Ausschnitt aus der der relativen Feuchte 65% zugeordneten Kurve konstanter relativer Feuchte entspricht, und einen zweiten Zweig 202, welcher einem Ausschnitt aus der der Temperatur 25°C zugeordneten Kurve konstanter Temperatur entspricht.

Für die Simulation wurden die Regelungsparameter wie folgt gewählt:

$T_{s1}$ = 22°C;
$T_{s2}$ = 25°C;
$T_K$ = 25°C;
$T_{s4}$ = 27°C;
$F_{s1}$ = 65 %
$F_{s2}$ = 75 %.

Ferner wurde von einer maximalen Kühlleistung des Kühlregisters 108 von 1400 kW, einer maximalen Heizleistung des Heizregisters 110 von 2750 kW und einer maximalen Drehfrequenz der Befeuchterpumpe 142 von 55 Hz bei einem Zuluftdurchsatz durch die Zuluft-Konditionieranlage 100 von 250000 m³/h ausgegangen.

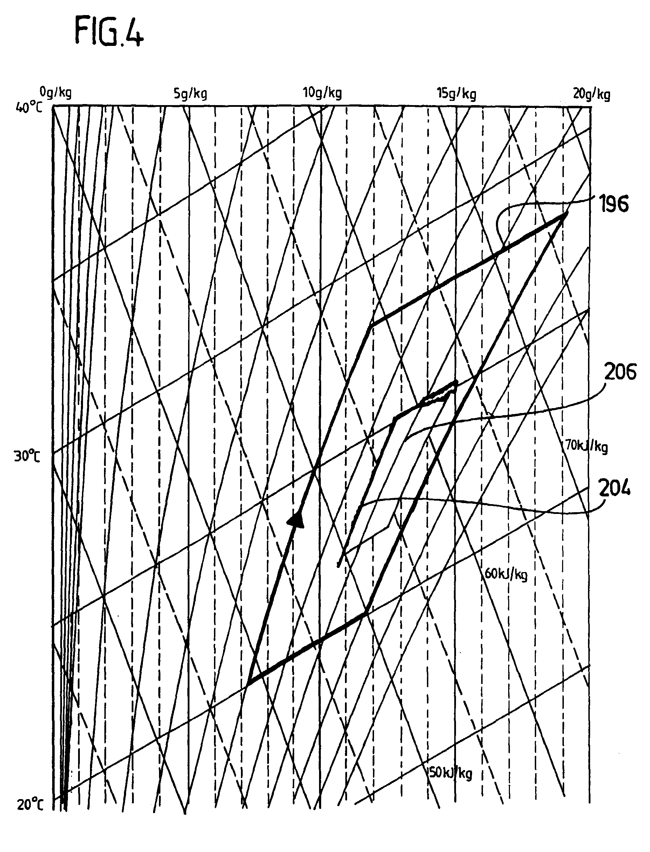

Unter diesen Bedingungen ergab die Simulation den in Fig. 4 mit 204 bezeichneten tatsächlichen Zuluft-Zustandsverlauf, welcher sehr gut mit dem in Fig. 3 dargestellten erwünschten Zuluft-Zustandsverlauf 198 übereinstimmt. Insbesondere ist klar zu erkennen, daß der Zustandspunkt der Zuluft das durch die Temperaturgrenzwerte $T_{s1}$ und $T_{s2}$ sowie durch die Feuchte-Grenzwerte $F_{s1}$ und $F_{s2}$ definierte Prozeßfenster 206 (bis auf geringfügige Abweichungen) nicht verläßt.

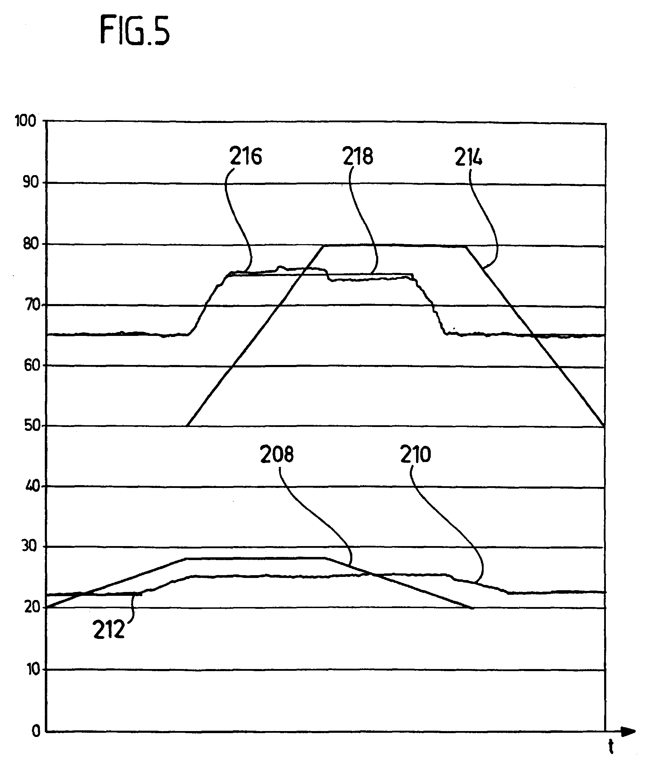

Der zeitliche Verlauf der Außenluft- und der Zuluft-Zustandsgrößen während des Außenluft-Zustandszyklus ist aus dem Schaubild der Fig. 5 zu ersehen, in welchem Temperaturwerte (in °C) und Werte der relativen Feuchte (in %) über der Zeit t aufgetragen sind.

In Fig. 5 ist der zeitliche Verlauf der Außenlufttemperatur mit dem Bezugszeichen 208, der zeitliche Verlauf der Zulufttemperatur mit 210 und der zeitliche Verlauf des Temperatur-Sollwerts mit 212 bezeichnet. Ferner ist in Fig. 5 der zeitliche Verlauf der Außenluftfeuchte mit 214, der zeitliche Verlauf der Zuluftfeuchte mit 216 und der zeitliche Verlauf des Feuchte-Sollwerts mit 218 bezeichnet.

Aus Fig. 5 ist deutlich zu erkennen, daß der Istwert der Zulufttemperatur (210) durch die Regelvorrichtung 164 stets innerhalb eines engen Toleranzbereichs um den aktuellen Temperatur-Sollwert (Kurve 212) gehalten wird. Ebenso wird der Istwert der Zuluftfeuchte (216) durch die Regelvorrichtung 164 stets innerhalb eines engen Toleranzbereichs um den aktuellen Feuchte-Sollwert (Kurve 218) gehalten.

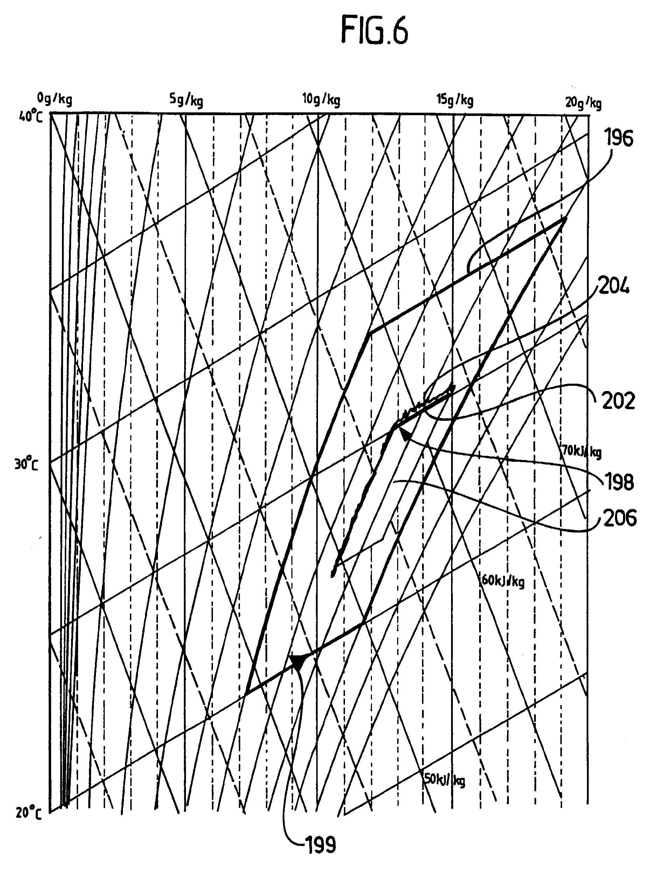

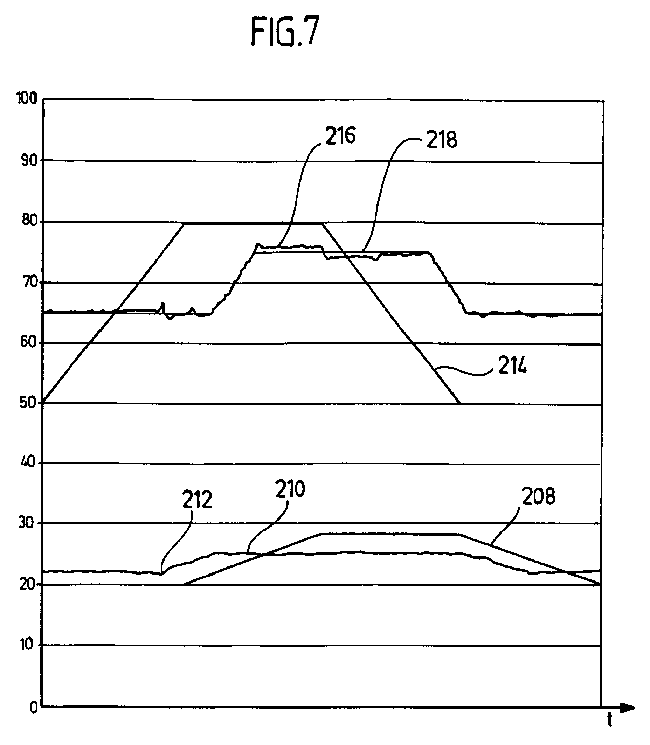

Bei einer zweiten, in den Fig. 6 und 7 dargestellten Simulation wurde der vorstehend im Zusammenhang mit Fig. 3 beschriebene Außenluft-Zustandszyklus in umgekehrter Reihenfolge durchfahren; das heißt, ausgehend von einer Außenlufttemperatur von 20°C und einer relativen Außenluftfeuchte von 50% wurde zunächst die relative Feuchte der Außenluft bei konstanter Temperatur auf 80% erhöht, anschließend die Temperatur der Außenluft bei konstanter relativer Feuchte auf 28°C erhöht, anschließend die relative Feuchte der Außenluft bei konstanter Temperatur auf 50% erniedrigt und schließlich die Temperatur der Außenluft bei konstanter relativer Feuchte auf 20°C erniedrigt.

Der In Fig. 6 dargestellte Außenluft-Zustandszyklus der zweiten Simulation entspricht somit dem Außenluft-Zustandszyklus der ersten Simulation, wurde jedoch in umgekehrter Richtung, das heißt im H-x-Diagramm im Gegenuhrzeigersinn, durchlaufen.

Die Regelungsparameter und die Leistungsdaten der Zuluft-Konditionieranlage 100 wurden ebenso gewählt wie bei der ersten Simulation.

Aus Fig. 6 ist zu ersehen, daß auch bei dieser Simulationsführung der tatsächliche Zuluft-Zustandsverlauf 204 im wesentlichen mit dem erwünschten Zuluft-Zustandsverlauf 198 übereinstimmt und sich der tatsächliche Zuluftzustand stets entlang des Prozeßfensters 206 bewegt.

Der zeitliche Verlauf der Außenlufttemperatur, der Zulufttemperatur, des aktuellen Temperatur-Sollwerts, der Außenluftfeuchte, der Zuluftfeuchte und des aktuellen Feuchte-Sollwerts ist aus dem Schaubild der Fig. 7 zu ersehen, wobei dieselben Bezugszeichen verwendet wurden wie in Fig. 5.

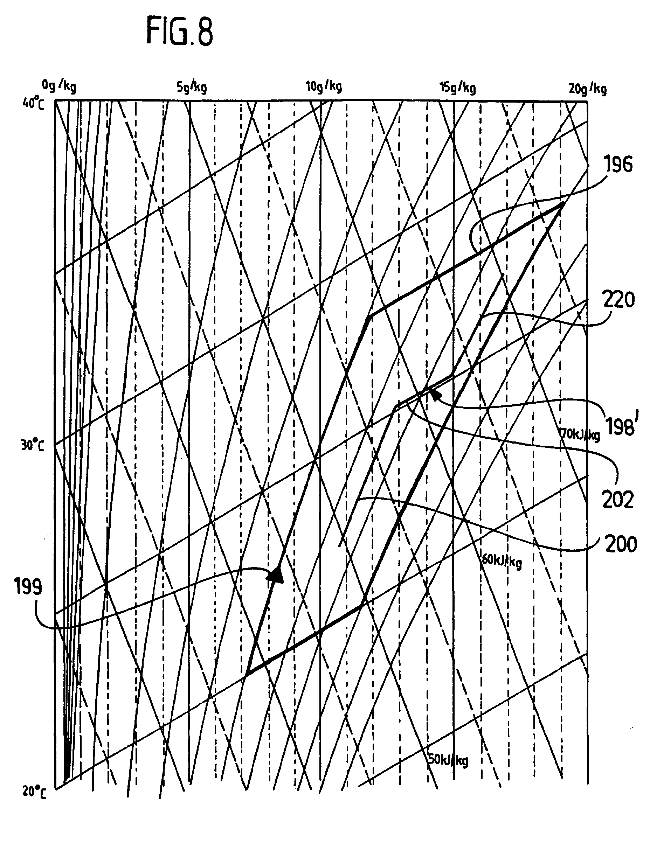

Bei einer dritten, in den Fig. 8 bis 10 dargestellten Simulation wurde derselbe Außenluft-Zustandszyklus 196 wie bei der ersten Simulation (siehe Fig. 3) durchlaufen. Die maximale Kühlleistung des Kühlregisters 108 der Zuluft-Konditionieranlage 100 wurde jedoch auf 700 kW bei gleichem Luftdurchsatz verringert, so daß die Kühlleistung nun nicht mehr ausreicht, die Temperatur der Zuluft auf den ersten Temperatur-Maximalwert $T_{s2}$ zu begrenzen.

In diesem Fall umfaßt der erwünschte Zuluft-Zustandsverlauf 198' daher neben dem ersten Zweig 200, welcher einem Ausschnitt aus der dem Feuchtewert von 65% zugeordneten Kurve konstanter relativer Feuchte entspricht, und dem zweiten Zweig 202, welcher einem Ausschnitt aus der dem Temperaturwert 25°C zugeordneten Kurve konstanter Temperatur entspricht, einen dritten Zweig 220, welcher einem Ausschnitt aus der dem relativen Feuchtewert 75% zugeordneten Kurve konstanter relativer Feuchte entspricht.

Abgesehen von der Erniedrigung der Kühlleistung wurden alle anderen Parameter genauso gewählt wie bei den ersten beiden Simulationen.

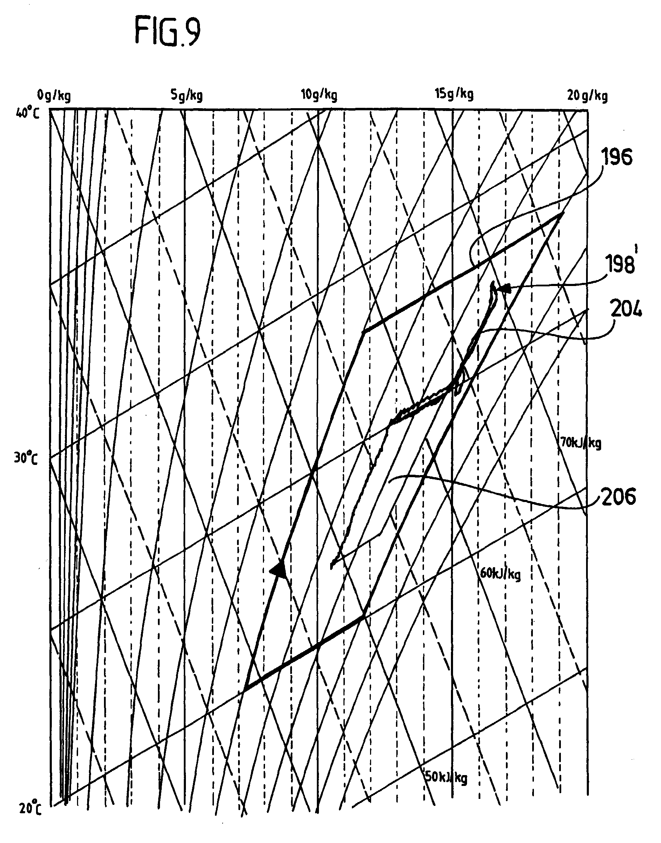

Wie aus Fig. 9 zu ersehen ist, stimmt auch bei dieser Simulation der tatsächliche Zuluft-Zustandsverlauf 204 gut mit dem erwünschten Zuluft-Zustandsverlauf 198' überein.

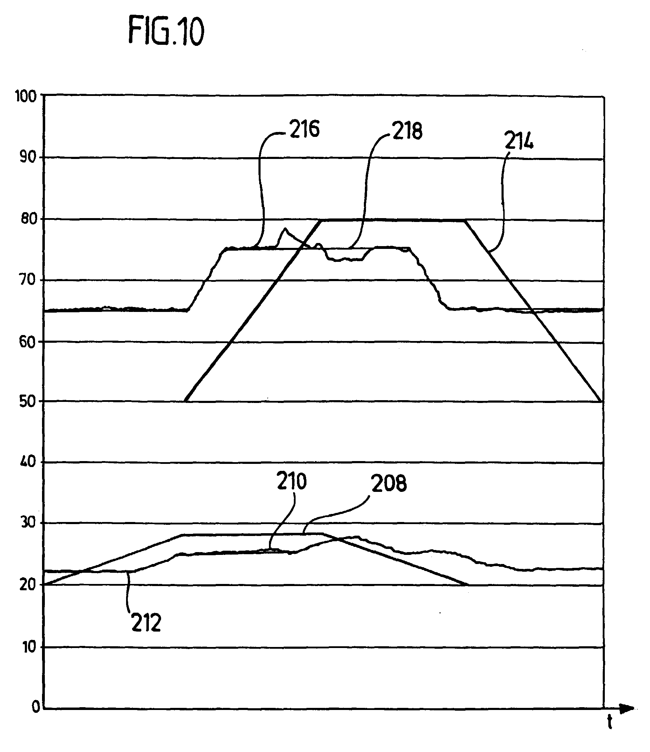

Die zeitlichen Verläufe der Außenlufttemperatur, der Zulufttemperatur, des aktuellen Temperatur-Sollwerts, der Außenluftfeuchte, der Zuluftfeuchte und des aktuellen Feuchte-Sollwerts sind aus der Fig. 10 zu ersehen, in welcher dieselben Bezugszeichen wie in den Fig. 5 und 7 verwendet worden sind.

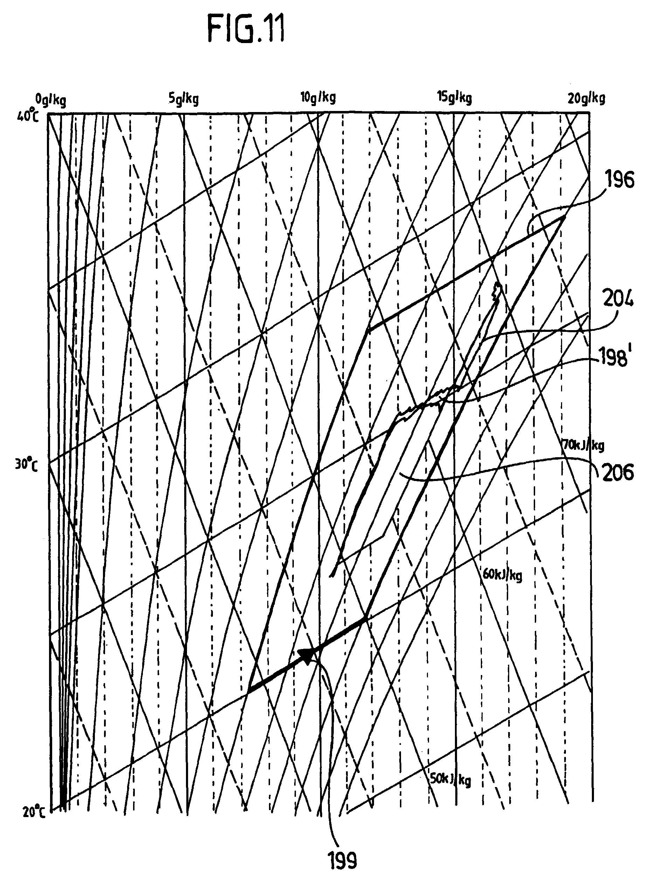

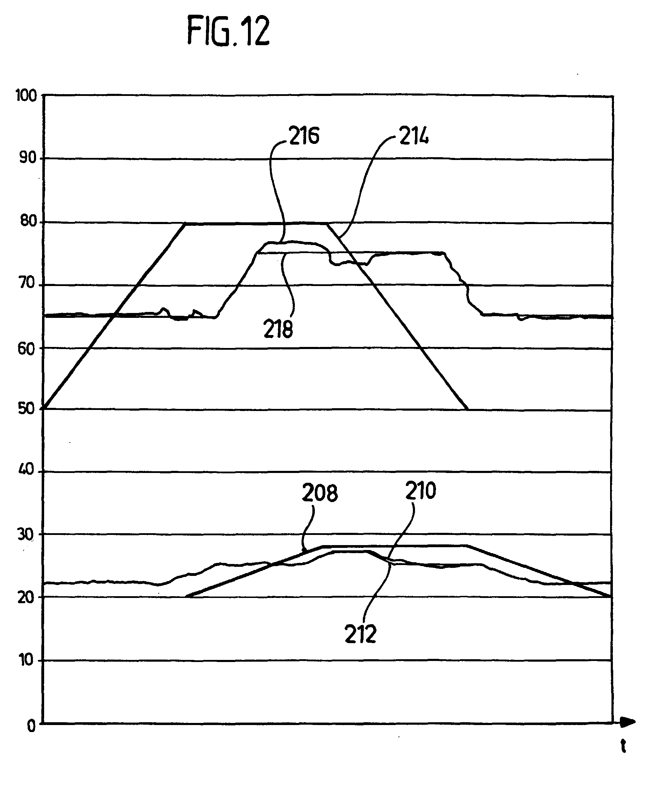

Bei einer vierten, in den Fig. 11 und 12 dargestellten Simulation wurden die Regelungsparameter und die Leistungsdaten der Zuluft-Konditionieranlage 100, insbesondere die maximale Kühlleistung des Kühlregisters 108, ebenso gewählt wie bei der dritten Simulation; der Außenluft-Zustandszyklus 196 wurde jedoch in umgekehrter Reihenfolge wie bei der dritten Simulation, im H-x-Diagramm also im Gegenuhrzeigersinn, durchlaufen.

Der in diesem Fall erwünschte Zuluft-Zustandsverlauf 198' stimmt mit den in Fig. 8 dargestellten erwünschten Zuluft-Zustandsverlauf bei der dritten Simulation überein.

Wie aus Fig. 11 zu ersehen ist, stimmt auch bei der vierten Simulation der tatsächliche Zuluft-Zustandsverlauf 204 gut mit dem erwünschten Zuluft-Zustandsverlauf 198' überein.

Die zeitlichen Verläufe der Außenlufttemperatur, der Zulufttemperatur, des aktuellen Temperatur-Sollwerts, der Außenluftfeuchte, der Zuluftfeuchte und des aktuellen Feuchte-Sollwerts bei der vierten Simulation sind aus Fig. 12 zu ersehen, in welcher dieselben Bezugszeichen wie in den Fig. 5, 7 und 10 verwendet worden sind.

Als ANHANG ist dieser Beschreibung ein in der Programmiersprache "EXCEL" verfaßtes Makro beigefügt, welches eine mögliche Realisierung der vorstehend beschriebenen, von der Verarbeitungseinheit 154 durchgeführten Arbeitsschritte darstellt.

ANHANG

Makro1

```
Sollwert_Bestimmung
=ARGUMENT("t_ist";1)        | IST-Werte
=ARGUMENT("f_ist";1)        |
=ARGUMENT("t_";1)           | SOLL-Werte
=ARGUMENT("f_";1)           |
=ARGUMENT("KW_zu";1)        | Endlagen KW-Ventil (bei 1 Endlage erreicht)
=ARGUMENT("KW_auf";1)       |
=ARGUMENT("HW_zu";1)        | Endlagen HW-Ventil (bei 1 Endlage erreicht)
=ARGUMENT("HW_auf";1)       |
=ARGUMENT("FU_ist";1)       | Frequenz Wäscherpumpe
=ARGUMENT("var";1)          | Belegung Ausgang der Formel "Regler"
FU_soll1=15
FU_soll2=18

=WENN(ODER(FU_ist<=FU_soll1;UND(t_<=t_kühl;NICHT(KW_zu));KW_auf;UND(t_ist>t_;HW_zu;KW_auf)))
=  WENN(UND(t_>=t_soll2;f_<f_soll2))
     f_=f_+0,2
=SONST()
     t_=t_+0,05                                   Sollwert-Erhöhung
=  ENDE.WENN()
=ENDE.WENN()

=WENN(ODER(UND(t_>t_kühl;NICHT(KW_auf));UND(FU_ist>FU_soll2;t_>t_soll1;NICHT(HW_zu))))
=  WENN(UND(t_<=t_soll2;f_>f_soll1))
     f_=f_-0,2
=SONST()
     t_=t_-0,05                                   Sollwert-Erniedrigung
=  ENDE.WENN()
=ENDE.WENN()


=NAMEN.ZUWEISEN("Ausgang";WAHL(var;t_;f_))
=RÜCKSPRUNG(Ausgang)


Regler
=ARGUMENT("t_ist";1)        | IST-Werte
=ARGUMENT("f_ist";1)        |
=ARGUMENT("t_";1)           | SOLL-Werte
=ARGUMENT("f_";1)           |
=ARGUMENT("KW_zu";1)        | Endlagen KW-Ventil (bei 0 Endlage erreicht)
=ARGUMENT("KW_auf";1)       |
=ARGUMENT("HW_zu";1)        | Endlagen HW-Ventil (bei 0 Endlage erreicht)
=ARGUMENT("HW_auf";1)       |
=ARGUMENT("FU_ist";1)       | Frequenz Wäscherpumpe
=ARGUMENT("var";1)          | Belegung Ausgang der Formel "Regler"
FU_soll1=15
FU_soll2=18

Temp=(t_-t_ist)             | Abweichung Temperatur
Feuchte=(f_-f_ist)          | Abweichung Feuchte

HW=Temp*0,01                | "Durchschalten" auf Stellgröße
KW=(-Temp-Feuchte)*0,01     |
VEW=Feuchte*0,005           |

=WENN(UND(HW_zu;HW<0))      | Endlagenabfrage
HW=0
=ENDE.WENN()
=WENN(UND(HW_auf;HW>0))
HW=0
=ENDE.WENN()
=WENN(UND(KW_zu;KW<0))
KW=0
=ENDE.WENN()
=WENN(UND(KW_auf;KW>0))
KW=0
=ENDE.WENN()
=WENN(UND(FU_ist<FU_soll1;VEW<0))
VEW=0
=ENDE.WENN()
=WENN(UND(FU_ist>FU_soll3;VEW>0))
VEW=0
=ENDE.WENN()

=WENN(UND(FU_ist>FU_soll1;NICHT(HW_zu));NAMEN.ZUWEISEN("KW";MIN(KW;0)))
=WENN(UND(FU_ist>FU_soll1;NICHT(KW_zu));NAMEN.ZUWEISEN("HW";MIN(HW;0)))   nie 3 gleich-zeitig
=WENN(UND(NICHT(KW_zu);NICHT(HW_zu));NAMEN.ZUWEISEN("VEW";MIN(VEW;0)))

=NAMEN.ZUWEISEN("Ausgang";WAHL(var;KW;HW;VEW))
=RÜCKSPRUNG(Ausgang)
```

**EP 1 081 442 A1**

**Patentansprüche**

1. Verfahren zum Regeln einer Zuluft-Konditionieranlage, welche mindestens zwei Aktoren zur Beeinflussung der Temperatur und der Feuchte von einem Arbeitsraum zuzuführender Zuluft umfaßt, wobei jeder Aktor durch einen diesem Aktor zugeordneten Regler in Abhängigkeit von jeweils einer Reglereingangsgröße geregelt wird, **dadurch gekennzeichnet,** daß mindestens eine der Reglereingangsgrößen als gemischte Reglereingangsgröße durch Verknüpfung einer Temperatur-Sollwertabweichung mit einer Feuchte-Sollwertabweichung gebildet wird.

2. Verfahren nach Anspruch 1, dadurch gekennzeichnet, daß die gemischte Reglereingangsgröße durch Ermittlung einer gewichteten Summe aus der Temperatur-Sollwertabweichung und der Feuchte-Sollwertabweichung gebildet wird.

3. Verfahren nach einem der Ansprüche 1 oder 2, dadurch gekennzeichnet, daß die Reglereingangsgröße mindestens eines der Regler auf den Wert null gesetzt wird, wenn sich der diesem Regler zugeordnete Aktor in einer Endlage befindet und das Vorzeichen der Reglereingangsgröße eine Verstellung des Aktors über die Endlage hinaus verlangen würde.

4. Verfahren nach einem der Ansprüche 1 bis 3, dadurch gekennzeichnet, daß mindestens drei Aktoren durch jeweils einen zugeordneten Regler geregelt werden und daß die Reglereingangsgröße mindestens eines der Regler auf den Wert null gesetzt wird, wenn sich mindestens zwei der Aktoren, die den übrigen Reglern zugeordnet sind, außerhalb ihrer Ruhelage befinden.

5. Verfahren nach Anspruch 4, dadurch gekennzeichnet, daß genau drei Aktoren durch jeweils einen zugeordneten Regler geregelt werden, und daß die Reglereingangsgröße eines der Regler auf den Wert null gesetzt wird, wenn sich die den beiden übrigen Reglern zugeordneten Aktoren außerhalb ihrer Ruhelage befinden.

6. Verfahren nach einem der Ansprüche 1 bis 5, dadurch gekennzeichnet, daß ein Temperatur-Sollwert und/oder ein Feuchte-Sollwert während des Regelungsvorgangs verändert werden.

7. Verfahren nach Anspruch 6, dadurch gekennzeichnet, daß einer der Aktoren auf einen Befeuchter der Zuluft-Konditionieranlage wirkt und eine Sollwert-Erhöhung durchgeführt wird, wenn dieser Aktor sich in seiner Ruhelage befindet.

8. Verfahren nach Anspruch 7, dadurch gekennzeichnet, daß der auf den Befeuchter der Zuluft-Konditionieranlage wirkende Aktor eine Befeuchterpumpe ist.

9. Verfahren nach einem der Ansprüche 6 bis 8, dadurch gekennzeichnet, daß einer der Aktoren auf eine Kühlung der Zuluft-Konditionieranlage wirkt und eine Sollwert-Erhöhung durchgeführt wird, wenn dieser Aktor sich außerhalb seiner Ruhelage befindet und zugleich der aktuelle Temperatur-Sollwert kleiner ist als oder gleich groß ist wie eine vorgegebene Mindesttemperatur für das Einschalten der Kühlung.

10. Verfahren nach einem der Ansprüche 6 bis 9, dadurch gekennzeichnet, daß einer der Aktoren auf eine Kühlung der Zuluft-Konditionieranlage wirkt und eine Sollwert-Erhöhung durchgeführt wird, wenn sich dieser Aktor in seiner Maximallage befindet.

11. Verfahren nach einem der Ansprüche 6 bis 10, dadurch gekennzeichnet, daß bei einer Sollwert-Erhöhung der Feuchte-Sollwert erhöht wird, wenn der aktuelle Temperatur-Sollwert größer ist als oder gleich groß ist wie ein vorgegebener erster Temperatur-Maximalwert und zugleich der aktuelle Feuchte-Sollwert kleiner ist als ein vorgegebener Feuchte-Maximalwert, und daß sonst der Temperatur-Sollwert erhöht wird.

12. Verfahren nach Anspruch 11, dadurch gekennzeichnet, daß der Temperatur-Sollwert nicht erhöht wird, wenn der erhöhte Temperatur-Sollwert einen zweiten Temperatur-Maximalwert übersteigen würde.

13. Verfahren nach einem der Ansprüche 6 bis 12, dadurch gekennzeichnet, daß ein erster Aktor auf einen Befeuchter der Zuluft-Konditionieranlage und ein zweiter Aktor auf eine Heizung der Zuluft-Konditionieranlage wirkt und eine Sollwert-Erniedrigung durchgeführt wird, wenn sich der auf den Befeuchter wirkende Aktor und der auf die Heizung wirkende Aktor beide außerhalb ihrer Ruhelagen befinden und zugleich der aktuelle Temperatur-Sollwert größer ist

**14**

als ein vorgegebener Temperatur-Minimalwert.

14. Verfahren nach einem der Ansprüche 6 bis 13, dadurch gekennzeichnet, daß einer der Aktoren auf eine Kühlung der Zuluft-Konditionieranlage wirkt und eine Sollwert-Erniedrigung durchgeführt wird, wenn sich dieser Aktor außerhalb seiner Maximallage befindet und zugleich der Temperatur-Sollwert größer ist als eine vorgegebene Mindesttemperatur für das Einschalten der Kühlung.

15. Verfahren nach einem der Ansprüche 6 bis 14, dadurch gekennzeichnet, daß bei einer Sollwert-Erniedrigung der Feuchte-Sollwert erniedrigt wird, wenn der aktuelle Temperatur-Sollwert kleiner ist als oder gleich groß ist wie ein vorgegebener erster Temperatur-Maximalwert und zugleich der aktuelle Feuchte-Sollwert größer ist als ein vorgegebener Feuchte-Minimalwert, und daß sonst der Temperatur-Sollwert erniedrigt wird.

16. Verfahren nach einem der Ansprüche 1 bis 15, dadurch gekennzeichnet, daß einer der Aktoren auf eine Kühlung der Zuluft-Konditionieranlage wirkt und daß die Reglereingangsgröße des diesem Aktor zugeordneten Reglers durch Verknüpfung der Temperatur-Sollwertabweichung mit der Feuchte-Sollwertabweichung gebildet wird.

17. Regelvorrichtung für eine Zuluft-Konditionieranlage (100), welche mindestens zwei Aktoren (122, 134, 142) zur Beeinflussung der Temperatur und der Feuchte von einem Arbeitsraum zuzuführender Zuluft umfaßt, wobei die Regelvorrichtung (164) für jeden Aktor (122, 134, 142) einen diesem Aktor zugeordneten Regler (126, 138, 146) aufweist, durch welche der jeweilige Aktor in Abhängigkeit von jeweils einer Reglereingangsgröße regelbar ist, dadurch gekennzeichnet, daß die Regelvorrichtung (164) eine Verarbeitungseinheit (154) umfaßt, mittels welcher mindestens eine der Reglereingangsgrößen als gemischte Reglereingangsgröße durch Verknüpfung einer Temperatur-Sollwertabweichung mit einer Feuchte-Sollwertabweichung bildbar ist.

18. Regelvorrichtung nach Anspruch 17, dadurch gekennzeichnet, daß mittels der Verarbeitungseinheit (154) die gemischte Reglereingangsgröße durch Ermittlung einer gewichteten Summe aus der Temperatur-Sollwertabweichung und der Feuchte-Sollwertabweichung bildbar ist.

19. Regelvorrichtung nach einem der Ansprüche 17 oder 18, dadurch gekennzeichnet, daß mittels der Verarbeitungseinheit (154) die Reglereingangsgröße mindestens eines der Regler (126, 138, 146) auf den Wert null setzbar ist, wenn sich der diesem Regler (126, 138, 146) zugeordnete Aktor (122, 134, 142) in einer Endlage befindet.

20. Regelvorrichtung nach einem der Ansprüche 17 bis 19, dadurch gekennzeichnet, daß die Regelvorrichtung (164) für mindestens drei Aktoren (122, 134, 142) jeweils einen zugeordneten Regler (126, 138, 146) umfaßt und daß die Reglereingangsgröße mindestens eines der Regler (126, 138, 146) mittels der Verarbeitungseinheit (154) auf den Wert null setzbar ist, wenn sich mindestens zwei der Aktoren, die den übrigen Reglern zugeordnet sind, außerhalb ihrer Ruhelage befinden.

21. Regelvorrichtung nach Anspruch 20, dadurch gekennzeichnet, daß die Regelvorrichtung (164) für genau drei Aktoren (122, 134, 142) jeweils einen zugeordneten Regler (126, 138, 146) umfaßt und daß die Reglereingangsgröße eines der Regler mittels der Verarbeitungseinheit (154) auf den Wert null setzbar ist, wenn sich die den beiden übrigen Reglern zugeordneten Aktoren außerhalb ihrer Ruhelage befinden.

22. Regelvorrichtung nach einem der Ansprüche 17 bis 21, dadurch gekennzeichnet, daß mittels der Verarbeitungseinheit (154) ein Temperatur-Sollwert (T') und/oder ein Feuchte-Sollwert (F') während des Betriebs der Regelvorrichtung (164) veränderbar sind.

23. Regelvorrichtung nach Anspruch 22, dadurch gekennzeichnet, daß einer Aktoren (142) auf einen Befeuchter (112) der Zuluft-Konditionieranlage (100) wirkt und mittels der Verarbeitungseinheit (154) eine Sollwert-Erhöhung durchführbar ist, wenn dieser Aktor sich seiner Ruhelage befindet.

24. Regelvorrichtung nach Anspruch 23, dadurch gekennzeichnet, daß der auf den Befeuchter (112) der Zuluft-Konditionieranlage (100) wirkende Aktor eine Befeuchterpumpe (142) ist.

25. Regelvorrichtung nach einem der Ansprüche 22 bis 24, dadurch gekennzeichnet, daß einer der Aktoren (122) auf eine Kühlung (108) der Zuluft-Konditionieranlage (100) wirkt und mittels der Verarbeitungseinheit (154) eine Sollwert-Erhöhung durchführbar ist, wenn dieser Aktor sich außerhalb seiner Ruhelage befindet und zugleich der aktuelle Temperatur-Sollwert (T') kleiner ist als oder gleich groß ist wie eine vorgegebene Mindesttemperatur für das Einschaltung der Kühlung ($T_K$).

26. Regelvorrichtung nach einem der Ansprüche 22 bis 25, dadurch gekennzeichnet, daß einer der Aktoren (122) auf eine Kühlung (108) der Zuluft-Konditionieranlage (100) wirkt und mittels der Verarbeitungseinheit (154) eine Sollwerterhöhung durchführbar ist, wenn sich dieser Aktor in seiner Maximallage befindet.

27. Regelvorrichtung nach einem der Ansprüche 22 bis 26, dadurch gekennzeichnet, daß mittels der Verarbeitungseinheit (154) bei einer Sollwerterhöhung der Feuchte-Sollwert (F') erhöhbar ist, wenn der aktuelle Temperatur-Sollwert (T') größer ist als oder gleich groß ist wie ein vorgegebener erster Temperatur-Maximalwert ($T_{s2}$) und zugleich der aktuelle Feuchte-Sollwert (F') kleiner ist als ein vorgegebener Feuchte-Maximalwert ($F_{s2}$), und daß sonst der Temperatur-Sollwert (T') erhöhbar ist.

28. Regelvorrichtung nach Anspruch 27, dadurch gekennzeichnet, daß der Temperatur-Sollwert (T') nicht erhöhbar ist, wenn der erhöhte Temperatur-Sollwert einen zweiten Temperatur-Maximalwert ($T_{s4}$) übersteigen würde.

29. Regelvorrichtung nach einem der Ansprüche 22 bis 28, dadurch gekennzeichnet, daß ein erster Aktor (142) auf einen Befeuchter (112) der Zuluft-Konditionieranlage (100) und ein zweiter Aktor (134) auf eine Heizung (110) der Zuluft-Konditionieranlage (100) wirkt und mittels der Verarbeitungseinheit (154) eine Sollwert-Erniedrigung durchführbar ist, wenn sich der auf den Befeuchter wirkende Aktor (142) und der auf die Heizung wirkende Aktor (134) beide außerhalb ihrer Ruhelagen befinden und zugleich der aktuelle Temperatur-Sollwert (T') größer ist als ein vorgegebener Temperatur-Minimalwert ($T_{s1}$).

30. Regelvorrichtung nach einem der Ansprüche 22 bis 29, dadurch gekennzeichnet, daß einer der Aktoren (122) auf eine Kühlung (108) der Zuluft-Konditionieranlage (100) wirkt und mittels der Verarbeitungseinheit (154) eine Sollwert-Erniedrigung durchführbar ist, wenn sich dieser Aktor (122) außerhalb seiner Maximallage befindet und zugleich der aktuelle Temperatur-Sollwert (T') größer ist als eine vorgegebene Mindesttemperatur für das Einschalten der Kühlung ($T_K$).

31. Regelvorrichtung nach einem der Ansprüche 22 bis 30, dadurch gekennzeichnet, daß mittels der Verarbeitungseinheit (154) bei einer Sollwert-Erniedrigung der Feuchte-Sollwert (F') erniedrigbar ist, wenn der aktuelle Temperatur-Sollwert (T') kleiner ist als oder gleich groß ist wie ein vorgegebener erster Temperatur-Maximalwert ($T_{s2}$) und zugleich der aktuelle Feuchte-Sollwert (F') größer ist als ein vorgegebener Feuchte-Minimalwert ($F_{s1}$), und daß sonst der Temperatur-Sollwert (T') erniedrigbar ist.

32. Regelvorrichtung nach einem der Ansprüche 17 bis 31, dadurch gekennzeichnet, daß einer der Aktoren (122) auf eine Kühlung (108) der Zuluft-Konditionieranlage (100) wirkt und daß mittels der Verarbeitungseinheit (154) die Reglereingangsgröße des diesem Aktor (122) zugeordneten Reglers (126) als gemischte Reglereingangsgröße durch Verknüpfung der Temperatur-Sollwertabweichung mit der Feuchte-Sollwertabweichung bildbar ist.

33. Zuluft-Konditionieranlage, umfassend mindestens zwei Aktoren (122, 134, 142) zur Beeinflussung der Temperatur und der Feuchte von einem Arbeitsraum zuzuführender Zuluft und eine Regelvorrichtung nach einem der Ansprüche 17 bis 32.

# FIG.1

# FIG.2

FIG.3

# FIG.4

# FIG.5

# FIG.6

# FIG.7

# FIG.8

FIG.9

FIG.10

# FIG.11

# FIG.12

EP 1 081 442 A1

Europäisches
Patentamt

**EUROPÄISCHER RECHERCHENBERICHT**

Nummer der Anmeldung

EP 00 11 7594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1996, no. 09, 30. September 1996 (1996-09-30) -& JP 08 123556 A (KONICA CORP), 17. Mai 1996 (1996-05-17) | 1,2,4,5, 16-18, 20,21, 32,33 | F24F11/00 |
| A | * Zusammenfassung *  * Abbildung 1 * | 3,6-15, 19,22-31 | |
| X | PATENT ABSTRACTS OF JAPAN vol. 003, no. 134 (M-079), 9. November 1979 (1979-11-09) -& JP 54 108180 A (TOSHIBA CORP), 24. August 1979 (1979-08-24) * Zusammenfassung * | 1,17 | |
| P,X | PATENT ABSTRACTS OF JAPAN vol. 1999, no. 14, 22. Dezember 1999 (1999-12-22) -& JP 11 257721 A (TOSHIBA CORP), 24. September 1999 (1999-09-24) * Zusammenfassung * | 1 | RECHERCHIERTE SACHGEBIETE (Int.Cl.7) |
| A | PATENT ABSTRACTS OF JAPAN vol. 017, no. 447 (M-1464), 17. August 1993 (1993-08-17) -& JP 05 099482 A (HITACHI AIR CONDITIONING & REFRIG CO LTD), 20. April 1993 (1993-04-20) * Zusammenfassung * | 1,4,17, 20 | F24F G05D |
| A | PATENT ABSTRACTS OF JAPAN vol. 1999, no. 02, 26. Februar 1999 (1999-02-26) -& JP 10 292941 A (TOSHIBA CORP), 4. November 1998 (1998-11-04) * Zusammenfassung * | | |

-/--

Der vorliegende Recherchenbericht wurde für alle Patentansprüche erstellt

| Recherchenort | Abschlußdatum der Recherche | Prüfer |
|---|---|---|
| DEN HAAG | 12. Dezember 2000 | De Graaf, J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

| | Europäisches Patentamt | EUROPÄISCHER RECHERCHENBERICHT | Nummer der Anmeldung<br>EP 00 11 7594 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 1997, no. 10,<br>31. Oktober 1997 (1997-10-31)<br>-& JP 09 159248 A (SANKI ENG CO LTD),<br>20. Juni 1997 (1997-06-20)<br>* Zusammenfassung * | | |
| A | US 5 632 333 A (IMAMURA TOSHIHIDE ET AL)<br>27. Mai 1997 (1997-05-27) | | |
| A | PATENT ABSTRACTS OF JAPAN<br>vol. 006, no. 153 (M-149),<br>13. August 1982 (1982-08-13)<br>-& JP 57 070342 A (TOSHIBA CORP),<br>30. April 1982 (1982-04-30)<br>* Zusammenfassung * | | |
| A | EP 0 851 179 A (BAUER ALBERT)<br>1. Juli 1998 (1998-07-01) | | |
| A | PATENT ABSTRACTS OF JAPAN<br>vol. 1999, no. 03,<br>31. März 1999 (1999-03-31)<br>-& JP 10 339500 A (TOSHIBA CORP),<br>22. Dezember 1998 (1998-12-22)<br>* Zusammenfassung * | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 12. Dezember 2000 | De Graaf, J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 7594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2000

| Im Recherchenbericht angeführtes Patentdokument | Datum der Veröffentlichung | Mitglied(er) der Patentfamilie | Datum der Veröffentlichung |
|---|---|---|---|
| JP 08123556 A | 17-05-1996 | US 5984002 A | 16-11-1999 |
| JP 54108180 A | 24-08-1979 | JP 1243185 C<br>JP 59013660 B | 14-12-1984<br>31-03-1984 |
| JP 11257721 A | 24-09-1999 | KEINE | |
| JP 05099482 A | 20-04-1993 | KEINE | |
| JP 10292941 A | 04-11-1998 | KEINE | |
| JP 09159248 A | 20-06-1997 | KEINE | |
| US 5632333 A | 27-05-1997 | JP 6007689 A<br>DE 4391901 C<br>DE 4391901 T<br>WO 9322602 A | 18-01-1994<br>29-10-1998<br>24-07-1997<br>11-11-1993 |
| JP 57070342 A | 30-04-1982 | KEINE | |
| EP 0851179 A | 01-07-1998 | DE 19654542 A<br>DE 19654955 A<br>AU 4931797 A<br>CA 2225768 A<br>CN 1191292 A<br>JP 10227512 A | 02-07-1998<br>02-07-1998<br>02-07-1998<br>27-06-1998<br>26-08-1998<br>25-08-1998 |
| JP 10339500 A | 22-12-1998 | KEINE | |

EPO FORM P0461

Für nähere Einzelheiten zu diesem Anhang : siehe Amtsblatt des Europäischen Patentamts, Nr.12/82